# EUROPEAN PATENT APPLICATION

(11) **EP 4 656 267 A2**
(43) Date of publication of application: **03.12.2025**
(21) Application number: 25203835.1
(22) Date of filing: 02.07.2020
(51) Int. Cl.: B01D 35/147

(54) **FILTER ELEMENT WITH INTEGRATED DRAIN FILTER**

(30) Priority: 03.07.2019 US 201962870456 P; 20.12.2019 US 201962951608 P
(62) Divisional of application: 20745428.1
(71) Applicant: Donaldson Company, Inc., Bloomington, MN 55431 (US)
(72) Inventor: GIFT, Gary H., Richfield 55423 (US); HIGGINS, Jason, M., Bloomington, MN 55431 (US); FREMBGEN, Daniel, Robert, Savage 55378 (US); MCGLADE, Robert, A., Bloomington, MN 55431 (US); GUSTAFSON, Michael, J., Bloomington, MN 55431 (US)
(74) Representative: IPLodge bv

(57) **Abstract**

The technology disclosed herein relates to, in part, a filter assembly having a primary media assembly and a secondary media assembly in fluid communication with the primary media assembly. A filter assembly outlet is downstream of the secondary media assembly. A filtration pathway extends through the primary media assembly, the secondary media assembly, and the filter assembly outlet. A drain pathway extends through the secondary media assembly and the filter assembly outlet, wherein the drain pathway circumvents the primary media assembly.

## Description

This application claims the benefit of U.S. Provisional Application No. 62/870,456, filed 03 July 2019, and of U.S. Provisional Application No. 62/951,608, filed 20 December 2019, the disclosures of which are incorporated by reference herein in their entireties.

### Technological Field

The present disclosure is generally related to filter elements. More particularly, the present disclosure is related to filter elements with an integrated drain filter.

### Background

Typically in hydraulic systems, the case drain flow path is separate from implement return flow paths. This is because the pump and motor case pressures cannot tolerate high back pressures caused by return flow lines with relatively higher bypass valve settings. Therefore, a separate flow path is typically needed for case drain flow which has lower back pressure and lower bypass valve settings than the return flow path.

### Summary

Some embodiments disclosed herein relate to a filter element. The filter element has a filter media assembly having a first media end and a second media end. The filter element has a central passageway from the first media end to the second media end. A first endcap is coupled to the first media end. A second endcap is coupled to the second media end. A drain pathway extends through the first endcap, and a filtration pathway extends from the central passageway through the filter media assembly. The drain pathway is separated from the filtration pathway in the first endcap.

In some such embodiments, the drain pathway extends through the central passageway and the second endcap. Additionally or alternatively, the drain pathway has a drain pathway inlet extending through the first endcap and a drain pathway outlet extending through the first endcap. Additionally or alternatively, the filtration pathway further extends through the first endcap.

Additionally or alternatively, a flow tube is disposed in the central passageway, wherein the flow tube contains the drain pathway. Additionally or alternatively, the flow tube is coupled to the first endcap about the drain pathway. Additionally or alternatively, the flow tube is coupled to the second endcap about the drain pathway. Additionally or alternatively, the flow tube is detached from the first endcap.

Additionally or alternatively, the drain pathway has a drain pathway inlet extending through the first endcap and a drain pathway outlet extending through the second endcap. Additionally or alternatively, the element has a drain media assembly defining a portion of the drain pathway, wherein the drain media assembly is a drain pathway outlet. Additionally or alternatively, the drain pathway outlet extends radially outward from the filter element. Additionally or alternatively, the flow tube defines a drain pathway outlet.

Additionally or alternatively, the filtration pathway inlet is positioned radially between the flow tube and the filter media assembly. Additionally or alternatively, the second endcap obstructs the filtration pathway in the central passageway. Additionally or alternatively, the first endcap is configured to be positioned vertically above the second endcap. Additionally or alternatively, the first endcap is configured to be positioned vertically below the second endcap. Additionally or alternatively, the filtration pathway extends through the first endcap and the second endcap.

Some embodiments of the technology disclosed herein relate to a filter element. A filter media assembly has a first media end and a second media end and a central passageway from the first media end to the second media end. A first endcap is coupled to the first media end. The first endcap defines a first endcap opening. A second endcap is coupled to the second media end. The second endcap defines a second endcap opening. The filter element has flow tube having a first tube end and a second tube end. The flow tube defines a first tube opening on the first tube end and a central opening extending from the first tube end to the second tube end. The flow tube is positioned in the central passageway. The flow tube extends between the first endcap opening and the second endcap opening. The flow tube and the filter media assembly define a first passageway opening separated from the central opening whereby the filter element has a filtration pathway and a drain pathway. The filtration pathway is from the first passageway opening through the filter media assembly via the central passageway. The first passageway opening defines an inlet to the filtration pathway. The drain pathway is along the central opening of the flow tube.

In some such embodiments, the flow tube and the second endcap form a seal about the central opening, and wherein the flow tube and the first endcap are detached. Additionally or alternatively, the flow tube extends in a longitudinal direction from the second endcap beyond the first endcap. Additionally or alternatively, the flow tube forms a seal with the first endcap about the central opening and the flow tube forms a seal with the second endcap about the central opening. Additionally or alternatively, the first passageway opening has an outer diameter that is larger than an outer diameter of the first tube opening. Additionally or alternatively, the filter element has a drain filter element having a drain filter inlet, where the flow tube is coupled to the drain filter element about the drain filter inlet. Additionally or alternatively, the drain filter element is coupled to the second endcap. Additionally or alternatively, the first passageway opening extends circumferentially around the first tube opening. Additionally or alternatively, the first passageway opening is a series of opening segments.

Some embodiments disclosed herein relate to a filter assembly having a primary filter element and a secondary filter element. The primary filter element has a primary media assembly having a first media end, a second media end, and a central passageway from the first media end to the second media end. A first endcap is coupled to the first media end and a second endcap is coupled to the second media end. A filtration pathway extends through the first endcap, the central passageway, and the primary media assembly. The filtration pathway has a filtration pathway inlet through the first endcap and an outlet through the primary media assembly. The secondary filter element has a secondary media assembly having a third media end, a fourth media end, and a cavity extending from the third media end to the fourth media end. A third endcap is coupled to the third media end of the secondary media assembly. The third endcap has a third endcap opening, where the cavity and the third endcap opening are configured to receive the primary filter element. A fourth endcap is coupled to the fourth end of the secondary media assembly. The filter assembly defines a drain pathway extending through the secondary filter element. The drain pathway is separated from the filtration pathway within the primary media assembly.

In some such embodiments, the drain pathway extends through the first endcap, the second endcap and the central passageway. Additionally or alternatively, the third endcap has an inner circumferential sealing surface that is configured to form a seal to an outer circumferential sealing surface of the first endcap. Additionally or alternatively, the assembly defines a gap between the first endcap and the third endcap. Additionally or alternatively, the gap between the first endcap and the third endcap defines a drain pathway inlet. Additionally or alternatively, a flow tube disposed in the central passageway, wherein the flow tube contains the drain pathway. Additionally or alternatively, the filtration pathway inlet is defined between the first endcap and the flow tube. Additionally or alternatively, the flow tube is coupled to the first endcap. Additionally or alternatively, the fourth endcap forms a fluid barrier across the cavity. Additionally or alternatively, the filtration pathway extends through the second endcap. Additionally or alternatively, the filter assembly has spacers extending in a longitudinal direction between the fourth endcap and second endcap. Additionally or alternatively, the fourth endcap and the second endcap define a flow gap that is a portion of the drain pathway from the second endcap to the secondary media assembly.

Additionally or alternatively, the assembly has a drain filter element having a drain filter inlet, where the drain filter element is along the drain pathway and the drain filter element is an outlet of the drain pathway. Additionally or alternatively, the drain filter is coupled to the second endcap and the fourth endcap. Additionally or alternatively, the drain filter element has a drain media assembly in fluid communication with the drain filter inlet, where the primary media assembly has a higher particle filtration efficiency than the drain media assembly. Additionally or alternatively, the primary media assembly has a higher particle filtration efficiency than the secondary media assembly. Additionally or alternatively, the drain pathway has a drain pathway inlet defined by the first endcap. Additionally or alternatively, the drain pathway has a drain pathway inlet defined by the flow tube. Additionally or alternatively, the filtration pathway inlet extends circumferentially around the drain pathway inlet.

Some embodiments relate to a system having a filter cover assembly having a filtration pathway. A primary filter element is configured to be removably coupled to the filter cover assembly. The primary filter element has a first endcap, a second endcap, and primary media assembly extending from the first endcap to the second endcap. The primary filter element has a first central passageway in fluid communication with the filtration pathway. A drain filter element is coupled to the filter cover assembly. A drain pathway is configured to extend to the drain filter element and circumvent the primary media assembly.

In some such embodiments, the filter cover assembly defines a portion of the drain pathway isolated from the filtration pathway. Additionally or alternatively, the drain pathway is configured to circumvent the primary media assembly through the first central passageway. Additionally or alternatively, the system has a secondary filter element having a third endcap, a fourth endcap, and secondary media assembly extending from the third endcap to the fourth endcap. The secondary filter element has a second central passageway extending from the third endcap through the secondary media assembly, where the second central passageway is configured to receive the primary filter element.

Additionally or alternatively, the drain pathway extends to a gap defined between the primary media assembly and the secondary media assembly. Additionally or alternatively, the third endcap is configured to form a seal with the first endcap. Additionally or alternatively, the drain filter element is the secondary filter element. Additionally or alternatively, the system has a flow tube extending through the first central passageway. Additionally or alternatively, the drain pathway extends through the third endcap. Additionally or alternatively, the drain pathway extends through the fourth endcap. Additionally or alternatively, the flow tube is coupled to the filter cover assembly about the drain pathway. Additionally or alternatively, the flow tube is coupled to the filter cover assembly about the bypass pathway. Additionally or alternatively, the drain filter element is coupled to the second endcap.

Additionally or alternatively, the filter cover assembly further has a fill port in fluid communication with the drain pathway, and a removable cover disposed on the fill port. Additionally or alternatively, the system has a bypass valve disposed between the drain pathway and the filtration pathway. Additionally or alternatively, the filter cover assembly comprises a filter cover and a filter head, wherein the filter cover and the filter head are coupled. Additionally or alternatively, the filter cover assembly has a filter cover and a filter head structure, where the filter head structure is defined by a tank and the filter cover is coupled to the filter head structure.

Some embodiments relate to a filter assembly. The assembly has a primary media assembly. A secondary media assembly is in fluid communication with the primary media assembly. A filter assembly outlet is downstream of the secondary media assembly. A filtration pathway extends through the primary media assembly, the secondary media assembly, and the filter assembly outlet. A drain pathway extends through the secondary media assembly and the filter assembly outlet. The drain pathway circumvents the primary media assembly.

In some such embodiments, a bypass pathway selectively extends from the filtration pathway through the secondary media assembly and the filter assembly outlet, where the bypass pathway bypasses the primary media assembly. Additionally or alternatively, the secondary media assembly is positioned downstream of the primary media assembly in the filtration pathway. Additionally or alternatively, the system has a primary filter element having the primary media assembly. The primary media assembly has a first media end, a second media end and a central passageway from the first media end to the second media end. A first endcap is coupled to the first media end and a second endcap is coupled to the second media end.

Additionally or alternatively, the drain pathway extends through the first endcap and the second endcap of the primary filter element. Additionally or alternatively, the system has a secondary filter element having the secondary media assembly having a third media end and fourth media end and having a cavity extending from the third media end to the fourth media end. A third endcap is coupled to the third media end of the secondary media assembly. The third endcap has a third endcap opening, where the cavity and the third endcap opening are configured to receive the primary filter element. A fourth endcap is coupled to the fourth end of the secondary media assembly.

Additionally or alternatively, the drain pathway extends through the fourth endcap of the secondary filter element. Additionally or alternatively, the drain pathway does not extend through the primary media assembly. Additionally or alternatively, the third endcap has an inner circumferential sealing surface that is configured to form a seal to an outer circumferential sealing surface of the first endcap. Additionally or alternatively, the third endcap and the first endcap define the drain pathway therebetween. Additionally or alternatively, the system has a fill port pathway extending through the secondary media assembly and the filter assembly outlet, where the fill port pathway circumvents the primary media assembly. Additionally or alternatively, the fill port pathway and the bypass pathway merge into a fluid flow pathway. Additionally or alternatively, the fill port pathway and the bypass pathway merge with the drain pathway.

Some embodiments relate to a system having a tank defining a fluid cavity, a fluid outlet, a filter assembly opening, a fluid return inlet, and a drain tank inlet. A filter assembly is disposed in the fluid cavity and coupled to the tank about the filter assembly opening. A filter cover assembly is coupled to the filter assembly and the tank. A filtration pathway extends through the tank from the fluid return inlet to the filter assembly. A drain conduit extends from the drain tank inlet to the filter assembly through the fluid cavity. A drain pathway is defined from the drain tank inlet through the drain conduit to the filter assembly.

In some such embodiments, the filter cover assembly is positioned towards a first end of the tank and the drain tank inlet is defined towards an opposite end of the tank. Additionally or alternatively, the tank defines a top end and a bottom end and the drain tank inlet is defined towards the bottom end of the tank. Additionally or alternatively, the filter cover assembly defines the fluid return inlet. Additionally or alternatively, the tank has a top end and a bottom end, and the tank defines the fluid return inlet towards the bottom end. Additionally or alternatively, the filter assembly comprises a primary media assembly and a secondary media assembly downstream of the primary media assembly.

Additionally or alternatively, the filtration pathway extends from the fluid return inlet through the primary media assembly and through the secondary media assembly. Additionally or alternatively, the drain pathway circumvents the primary media assembly and extends through the secondary media assembly. Additionally or alternatively, the filter cover assembly has a filter cover and a filter head, wherein the filter cover and the filter head are coupled. Additionally or alternatively, the filter cover assembly has a filter cover and a filter head structure, wherein the filter head structure is defined by the tank and the filter cover is coupled to the filter head structure.

Some embodiments disclosed herein relate to a filter assembly. The filter assembly has a primary media assembly. A secondary media assembly is in fluid communication with the primary media assembly. A filtration pathway outlet is downstream of the secondary media assembly. A filtration pathway extends through the primary media assembly, the secondary media assembly, and the filtration pathway outlet. A drain pathway outlet is configured to merge with the filtration pathway outlet. A drain pathway extends to the drain pathway outlet. A drain media assembly is disposed across the drain pathway. A fluid flow pathway selectively extends to the drain pathway upstream of the drain media assembly.

In some such embodiments, the fluid flow pathway is a bypass pathway that selectively extends from the fluid flow pathway to the drain pathway, where the bypass pathway is upstream of the primary media assembly. Additionally or alternatively, the fluid flow pathway is a fill port pathway that is selectively openable by a user. Additionally or alternatively, the secondary media assembly is positioned downstream of the primary media assembly in the filtration pathway. Additionally or alternatively, the filter assembly has a primary filter element having the primary media assembly. The primary media assembly has a first media end, a second media end and a central passageway from the first media end to the second media end. A first endcap is coupled to the first media end and a second endcap is coupled to the second media end.

Additionally or alternatively, the filter assembly has a secondary filter element having the secondary media assembly. The secondary media assembly has a third media end and fourth media end and a cavity extending from the third media end to the fourth media end. A third endcap is coupled to the third media end of the secondary media assembly. The third endcap has a third endcap opening, where the cavity and the third endcap opening are configured to receive the primary filter element. A fourth endcap is coupled to the fourth end of the secondary media assembly.

Additionally or alternatively, the third endcap has an inner circumferential sealing surface that is configured to form a seal to an outer circumferential sealing surface of the first endcap. Additionally or alternatively, a bypass pathway selectively extends to the secondary media assembly and bypassing the primary media assembly. Additionally or alternatively, a fill port pathway extends through the secondary media assembly and the filtration pathway outlet, where the fill port pathway circumvents the primary media assembly.

The above summary is not intended to describe each embodiment or every implementation. Rather, a more complete understanding of illustrative embodiments will become apparent and appreciated by reference to the following Detailed Description of Exemplary Embodiments and claims in view of the accompanying figures of the drawing.

### Brief Description of the Drawings

FIG. 1 is a perspective view of an example filter element consistent with the technology disclosed herein.
FIG. 2 is an example cross-sectional view of the example filter element of FIG. 1.
FIG. 3 is a cross-sectional view of another example filter element consistent with the technology disclosed herein.
FIG. 4 is a cross-sectional view of an example filter assembly consistent with the technology disclosed herein.
FIG. 5 is a cross-sectional view of another example filter assembly consistent with the technology disclosed herein.
FIG. 6A is a schematic of some example systems consistent with the technology disclosed herein.
FIG. 6B is a schematic of some other example systems consistent with the technology disclosed herein.
FIG. 7 is a perspective view of an example system consistent with the technology disclosed herein.
FIG. 8 is a first cross-sectional view of the example system of FIG. 7.
FIG. 9 is a second cross-sectional view of the example system of FIG. 7.
FIG. 10 is a schematic cross-sectional view of another example system consistent with the technology disclosed herein.
FIG. 11 is a cross-sectional view of another example filter assembly consistent with the technology disclosed herein.
FIG. 12 is a perspective view of an example tank system consistent with some embodiments.
FIG. 13 is an exploded view of an example system consistent with FIG. 12.
FIG. 14 is a first cross-sectional view of an example system consistent with FIG. 12.
FIG. 15 is a second cross-sectional view of an example system consistent with FIG. 12.
FIG. 16 is a cross-sectional view of another example filter element.
FIG. 17 is a perspective view of the example filter element of FIG. 16.
FIG. 18 is an example filter assembly consistent with FIGS. 16-17.
FIG. 19 is an example system consistent with FIG. 18.
FIG. 20 is another example system consistent with FIG. 18.
FIG. 21 is a partial cross-sectional perspective view of another example system.

The present technology may be more completely understood and appreciated in consideration of the following detailed description of various embodiments in connection with the accompanying drawings.

The figures are rendered primarily for clarity and, as a result, are not necessarily drawn to scale. Moreover, various structure/components, including but not limited to fasteners, electrical components (wiring, cables, etc.), and the like, may be shown diagrammatically or removed from some or all of the views to better illustrate aspects of the depicted embodiments, or where inclusion of such structure/components is not necessary to an understanding of the various exemplary embodiments described herein. The lack of illustration/description of such structure/components in a particular figure is, however, not to be interpreted as limiting the scope of the various embodiments in any way.

### Detailed Description

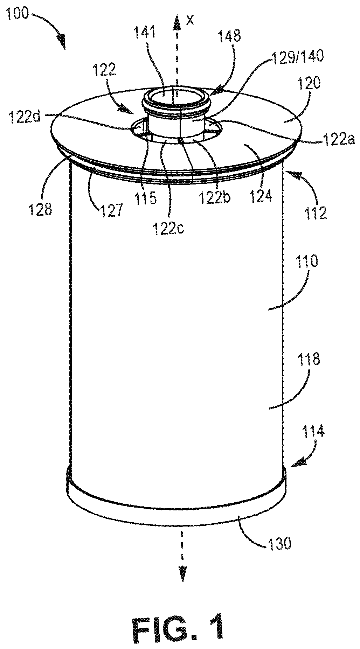

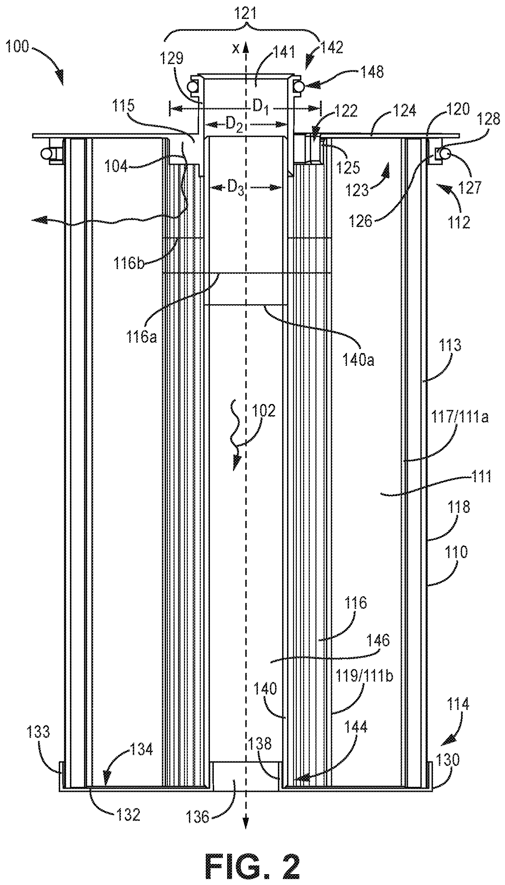

FIG. 1 is an example filter element 100 consistent with the technology disclosed herein. FIG. 2 is an example cross-sectional view of the example filter element 100 of FIG. 1. The filter element 100 has filter media assembly 110 defining a central passageway 116, a first endcap 120 coupled to a first media end 112 of the filter media assembly 110, a second endcap 130 coupled to a second media end 114 of the filter media assembly 110, and a flow tube 140 disposed in the central passageway 116. The filter element 100 defines a filtration pathway 104 and a drain pathway 102, where the filtration pathway 104 extends through the filter media assembly 110 and the drain pathway 102 bypasses/circumvents (does not extend through) the filter media assembly 110.

The filter media assembly 110 is generally configured to filter a fluid. In some embodiments the filter media assembly 110 is configured to filter hydraulic fluid. The first end 112 of the filter media assembly 110 is coupled to the first endcap 120 and the second end 114 of the filter media assembly 110 is coupled to a second endcap 130. The filter media assembly 110 generally has a cylindrical arrangement. The filter media assembly 110 defines the central passageway 116 extending from the first media end 112 to the second media end 114. In the current example, the central passageway 116 defines the filtration pathway 104 and the drain pathway 102.

The filter media assembly 110 and the central passageway 116 share a central axis *x,* where the central axis *x* extends in a longitudinal direction. The length of the filter media assembly 110 in the longitudinal direction can vary. In some embodiments the length of the filter media assembly 110 is greater than 3.5 inches (8.9cm). In some embodiments the length L of the filter media assembly 110 is less than 40 inches (101.6cm). In some embodiments the length L of the filter media assembly 110 ranges from about 4-40 inches (10.2-101.6cm), 15-30 inches (38.1-76.2cm), or 10-25 inches (25.4-63.5cm).

The filter media assembly 110 has filter media 111. The filter media 111 can be constructed of a variety of materials and combinations of materials suitable for filtering a fluid, such as a hydraulic fluid. In some embodiments the filter media 111 is constructed of fibers. The filter media 111 is pleated in various embodiments. In some other embodiments, the filter media is a sheet of media wrapped in a spiraled configuration about the longitudinal axis.

In some embodiments where the filter media 111 is pleated, such as in the example depicted, the filter media 111 is a sheet of media that has a first set of pleat folds 117 cumulatively defining an outer circumferential limit 111a (FIG. 2) of the filter media 111 and a second set of pleat folds 119 cumulatively defining an inner circumferential limit 111b of the filter media 111. In the current example, the inner circumferential limit 111b of the filter media 111 is an inner radial boundary 119 (which is also the pleat folds 119) of the filter media assembly 110. But in some embodiments, a structural support can abut the filter media 111 along its inner boundary and such a structural support would define the inner radial boundary of the filter media assembly 110. Indeed, in the current example where a structural support 113 surrounds the filter media 111, the structural support 113 defines an outer radial boundary 118 of the filter media assembly 110.

The structural support 113 is generally configured to provide structural support to the filter media 111 to prevent bursting of the filter media 111 when subjected to forces resulting from liquid flow therethrough. The structural support 113 generally does not exhibit a particle filtration efficiency and is more permeable than the filter media assembly 110. Here the structural support 113 can be a tubular screen surrounding the outer boundary of the filter media 111. In some embodiments the structural support(s) 113 is omitted. As mentioned above, in some examples a structural support abuts an inner boundary of the filter media 111 within the central passageway 116. In some embodiments, a structural support abuts the filter media 111 along the inner boundary and the outer boundary of the filter media 111.

The first endcap 120 is generally configured to retain the first media end 112 of the filter media assembly 110 and define a portion of a filtration pathway 104 through the filter media assembly 110. The first endcap 120 is also configured to define a portion of a drain pathway 102, and, as such, the drain pathway 102 extends through the first endcap 120. The drain pathway 102 is separated from the filtration pathway 104 in the first endcap 120 meaning that there is a fluid barrier (here, the flow tube 140) between at least a portion of the drain pathway 102 and the filtration pathway 104 in the first endcap 120. In some other embodiments the drain pathway 102 is outside of the first endcap, which makes the drain pathway separate from the filtration pathway in the first endcap. The first endcap 120 is coupled to the first media end 112. In the current example, the first endcap 120 defines a first endcap opening 121 (best visible in FIG. 2) extending from outside the filter assembly 101 to the central passageway 116 in the longitudinal direction. In the current example, the first endcap opening 121 is a combination of a plurality of openings that is a first tube opening 141 and a first passageway opening 122 having a series of discrete openings that are opening segments 122a, 122b, 122c, 122d, which will be described in more detail, below.

As is best visible in FIG. 2, the first endcap 120 has a first media potting structure 123 that is configured to receive the first end 112 of the filter media assembly 110. The first media potting structure 123 is defined by an annular surface 124 abutting the first end 112 of the filter media assembly 110, an inner tubular flange 125, and an outer tubular flange 126. The inner tubular flange 125 extends longitudinally from the annular surface 124 into the central passageway 116. The inner tubular flange 125 abuts the inner radial boundary 119 of the filter media assembly 110. The outer tubular flange 126 extends longitudinally from the annular surface 124 over the outer radial boundary 118 of the first end 112 of the filter media assembly 110. In various embodiments, the first media potting structure 123 and the first end 112 of the filter media assembly 110 are bonded with an adhesive/sealant that is disposed in the first media potting structure 123.

The first endcap 120 has an outer circumferential sealing surface 128 about the longitudinal axis x that is configured to form a seal with filtration system components, which will be described in more detail, below. The outer circumferential sealing surface 128 shares the central axis x of the filter media assembly 110 and central passageway 116. The outer circumferential sealing surface 128 can be a circumferential cavity that is configured to receive an elastomeric component, such as an o-ring 127. In some embodiments the circumferential cavity is discontinuous, while in other embodiments the circumferential cavity is continuous.

The second endcap 130 is generally configured to retain the second media end 114 of the filter media assembly 110 and define a portion of the filtration pathway 104 through the filter media assembly 110. In the current example, the second endcap 130 is configured to define a portion of a drain pathway 102 and, as such, the drain pathway 102 extends through the second endcap 130. The drain pathway 102 is separated from the filtration pathway 104 in the second endcap 130. The second endcap 130 is configured to obstruct the central passageway 116 radially outward from the flow tube 140. The second endcap 130 is coupled to the second media end 114 and defines a second endcap opening 136 (where "second endcap" is used to modify the term "opening" because the opening is defined by the second endcap). As will be discussed below, the second endcap opening 136 can define a filter element outlet. In the current example, the second endcap 130 has an inner tubular flange 138 extending longitudinally into the central passageway 116. The inner tubular flange 138 surrounds the second endcap opening 136. The inner tubular flange 138 can be considered a segment of the flow tube. In some embodiments the second endcap 130 does not have an inner tubular flange 138.

As is best visible in FIG. 2, the second endcap 130 has a second media potting structure 134 that is configured to receive the second end 114 of the filter media assembly 110. The second media potting structure 134 is defined by an annular surface 132 abutting the second end 114 of the filter media assembly 110 and an outer tubular flange 133. The outer tubular flange 133 extends longitudinally from the annular surface 132 over the outer radial boundary 118 of the second end 114 of the filter media assembly 110. In various embodiments, the second media potting structure 134 and the second end 114 of the filter media assembly 110 are bonded with an adhesive/sealant that is disposed in the second media potting structure 134.

The flow tube 140 is generally configured to define a portion of the drain pathway 102. The flow tube 140 is generally configured to fluidly separate the drain pathway 102 from the filtration pathway 104 through the filter element 100. The flow tube 140 has a first tube end 142 and a second tube end 144. The first tube end 142 defines a first tube opening 141 and the flow tube 140 defines a central opening 146 extending from the first tube end 142 to the second tube end 144. The first tube end 142 has a sealing structure 148 that is configured to form a seal with system components. The sealing structure can be an o-ring or other sealing material disposed about the first tube end 142.

The flow tube 140 and its central opening 146 extend in the longitudinal direction. The central opening 146 forms an elongate cylinder in the current example, but in other examples the central opening can be tapered or form other shapes. In the current example, the flow tube 140 is positioned in the central passageway 116. Specifically, the flow tube 140 is positioned centrally to the central passageway 116.

The flow tube 140 is sealably coupled to the second endcap 130 about the second endcap opening 136. In particular, the flow tube 140 and the inner tubular flange 138 of the second endcap 130 mutually engage to form a radial seal about the second endcap opening 136. While, in the current example, the second tube end 144 of the flow tube 140 frictionally and sealably receives the inner tubular flange 138 of the second endcap 130, in some embodiments the flow tube 140 can form an integral, unitary structure with the second endcap 130, such as where the flow tube 140 and second endcap 130 are formed through a single molding operation. The inner tubular flange 138 can define a portion of the flow tube 140.

In examples consistent with the current embodiment, the first tube end 142 of the flow tube 140 is formed by an endcap tube 129 of the first endcap 120. The endcap tube 129 can be considered a first segment of the flow tube 140 that frictionally and sealably couples to a second segment of the flow tube 140. The first segment of the flow tube 140 and the second segment of the flow tube 140 mutually engage and form a radial seal about the central opening 146. The endcap tube 129 extends longitudinally outward from the first endcap 120. In some embodiments the first endcap 120 does not have an endcap tube 129.

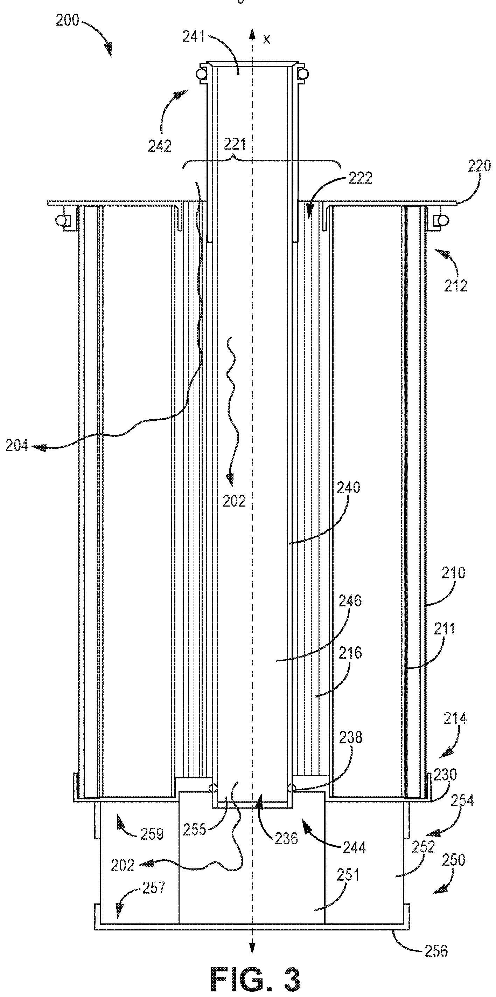

In some embodiments, the flow tube is separate from and detached from the first endcap (an example of which is depicted in FIG. 3 and described below). In some other embodiments, the flow tube is a single unitary structure separate from the first endcap but coupled to the first endcap. In some further embodiments, the first endcap defines a larger segment of the flow tube 140. In yet further embodiments, the first endcap and the flow tube are a single, unitary component. In some embodiments, the flow tube is a detachable and replaceable component of the filter element. In such embodiments, any known configuration for forming a detachable, sealed connection with the second endcap 130 (and the first endcap 120, if appropriate to the specific configuration) can be used.

The flow tube 140 defines the first passageway opening 122. The first passageway opening 122 is configured to be fluidly separated from the first tube opening 141 by the flow tube 140. The flow tube 140 is generally constructed of a material that is impermeable to fluid flow. The first tube opening 141 is in direct fluid communication with the central opening 146 of the flow tube 140. The first passageway opening 122 is in direct fluid communication with the central passageway 116 of the filter media assembly 110. As such, the filter element 100 defines the filtration pathway 104 extending from the first passageway opening 122 through the filter media assembly 110 via the central passageway 116. The first passageway opening 122 can define a filtration pathway inlet to the filter element 100. The filter element 100 also defines a drain pathway 102 from the first tube opening 141 to the second endcap opening 136. The first tube opening 141 can define a drain pathway inlet to the filter element 100. The second endcap opening 136 can define a drain pathway outlet of the filter element 100.

In the current example, the first passageway opening 122 is a plurality of opening segments 122a, 122b, 122c, 122d defined between the first endcap 120 and the flow tube 140. The first endcap 120 has a plurality of braces 115 extending radially from the flow tube 140 to the annular surface 124. The plurality of braces 115 separate each of the opening segments 122a, 122b, 122c, 122d that cumulatively define the first passageway opening 122. The plurality of opening segments 122a, 122b, 122c, 122d are defined about the central axis x. The first passageway opening 122 extends circumferentially around the first tube opening 141. As such, the first passageway opening 122 has an outer diameter D₁ that is larger than an outer diameter D₂ of the first tube opening 141. The outer diameter D₁ of the first passageway opening 122 can correspond to an inner diameter of the filter media assembly 110.

The surface area of the filter media 111, the permeability of the filter media 111, and the cross-sectional flow area of the central passageway 116 in the plane perpendicular to the central axis x are example factors that dictate the maximum flow rate that the filter element is configured to accommodate for effective filtration. In the current example, the cross-sectional flow area 116b of the filtration pathway 104 in the central passageway 116 is the area of the annulus defined by the cross-sectional area 116a of the central passageway 116 minus the cross-sectional area 140a of the flow tube 140 across the central passageway 116. It is noted that in FIG. 2, the cross-sectional areas are represented by lines representing the example plane that the cross-sectional area would extend through in the direction perpendicular to the central axis x. In some embodiments, where the filter element 100 is designed to filter hydraulic fluid at a flow rate of 300 L/min, the cross-sectional flow area 116b of the filtration pathway 104 is at least 1.7 in². In some such examples, if the filtration pathway 104 has a cross-sectional flow area of under 1.7 in² in the central passageway 116, undesirable back pressure may be generated in the system in which the filter element 100 is employed.

It will be appreciated that the cross-sectional area 140a of the flow tube 140 across the central passageway 116 impacts the liquid flow capacity of the filtration pathway 104 within the central passageway 116. The cross-sectional area of the flow tube across the central opening is not generally limited. However, in some embodiments the maximum cross-sectional area 140a of the flow tube across the central opening is 4 in². Furthermore, the cross-sectional area across the inner dimension D₃ of the flow tube 140 (in the plane perpendicular to the central axis x) is generally sized to accommodate a maximum expected liquid flow rate along the drain pathway 102. In some embodiments, the flow tube 140 has a cross-sectional area across its inner dimension D₃ of at least 0.1 in². In some embodiments, the flow tube 140 has a cross-sectional area across its inner dimension D₃ of at least 0.3 in². The flow tube 140 can have a cross-sectional area across its inner dimension of D₃ from 0.3 in² to 4 in².

The flow tube 140 generally extends between the first endcap and the second endcap 130. In this example, the flow tube 140 extends from the first endcap 120 to the second endcap 130. More particularly, the flow tube 140 extends in a longitudinal direction from the second endcap 130 to the first endcap 120 and beyond the first endcap 120. In some examples the flow tube extends from the second endcap towards the first endcap. In such examples, the flow tube may extend to a longitudinal position between the first endcap and the second endcap.

The drain pathway 102 is generally configured to be separated from the filtration pathway 104 within the filter media assembly 110. In various embodiments the drain pathway extends through at least one of the first endcap 120 and the second endcap 130. In the current example, the drain pathway extends through both the first endcap 120 and the second endcap 130. In the current example, the drain pathway extends through the first endcap 120, the second endcap 130 and the central passageway 116.

FIG. 3 is a cross-sectional view of another example filter element 200 consistent with the technology herein. The filter element 200 has filter media assembly 210 defining a central passageway 216, a first endcap 220 coupled to a first media end 212 of the filter media assembly 210, a second endcap 230 coupled to a second media end 214 of the filter media assembly 210, and a flow tube 240 disposed in the central passageway 216. The filter element 200 defines a filtration pathway 204 and a drain pathway 202, where the filtration pathway 204 extends through the filter media assembly 210 and the drain pathway 202 circumvents the filter media assembly 210.

The various features and functionalities of the current example filter element 200 are generally consistent with the discussion above with respect to the filter element of FIGS. 1 and 2, except where such features and functionalities are inconsistent with the current description.

The filter media assembly 210 defines the central passageway 216 extending from the first media end 212 to the second media end 214. The central passageway 216 contains a portion of the filtration pathway 204 and a portion of the drain pathway 202. The drain pathway 202 is generally separated from the filtration pathway 204 within the filter media assembly 210. The drain pathway 202 is separated from the filtration pathway 204 in the central passageway 216. The first endcap 220 defines a first endcap opening 221 that contains a portion of the filtration pathway 204 and the drain pathway 202. The drain pathway 202 is separated from the filtration pathway 204 in the first endcap 220. The second endcap 230 defines a portion of the filtration pathway 204 and the drain pathway 202. The drain pathway 202 is separated from the filtration pathway 204 through the second endcap 230. The second endcap 230 defines a second endcap opening 236 and obstructs the central passageway 216 at the second media end 214 radially outward from the second endcap opening 236 (and the flow tube 240). Such a configuration prevents fluid flow in the filtration pathway 204 through the second endcap 230.

The flow tube 240 is sealably coupled to the second endcap 230 about the second endcap opening 236 towards a second tube end 244 of the flow tube 240. In some embodiments the flow tube 240 is detachably coupled to the second endcap 230. A first tube end 242 of the flow tube 240 defines a first tube opening 241 in direct fluid communication with a central opening 246 of the flow tube 240. The first tube opening 241 can be a drain pathway inlet relative to the filter element.

A first passageway opening 222 is defined by the flow tube 240 and the filter media assembly 210. More specifically, the first passageway opening 222 is defined by the flow tube 240 and the first endcap 220 on the first end 212 of the filter media assembly 210. The first passageway opening 222 can define a filtration pathway inlet relative to the filter element. In the current example, the first passageway opening 222 is a single opening extending circumferentially around the flow tube 240. As such, similar to the examples of FIGS. 1 and 2, the first passageway opening 222 has an outer diameter, which is an inner diameter of the filter media assembly 210, that is larger than an outer diameter of the first tube opening 241.

In the current example, the second endcap 230 does not have an inner tubular flange (138) that sealably coupled to the flow tube as in FIG. 2. In this example, the flow tube 240 and the first endcap 220 are detached. The flow tube 240 extends between the first endcap 220 to the second endcap 230. More particularly, the flow tube 240 extends in the longitudinal direction from the second endcap 230 beyond the first endcap 220. However, in some other embodiments the flow tube can extend to a longitudinal position between the first endcap and the second endcap. In this example, the flow tube 240 extends in a longitudinal direction from the second endcap 230 to the first endcap 220, and beyond the first endcap 220. Also in this example, the flow tube 240 extends longitudinally outward from each of the first endcap 220 and the second endcap 230. The flow tube 240 is sealably coupled to the second endcap 230 about the second endcap opening 236. A seal 238 can be disposed between the flow tube 240 and the second endcap 230.

In examples consistent with the currently-depicted embodiment, the filter element 200 has a drain filter element 250 that partially defines the drain pathway 202. The drain filter element 250 is configured to filter fluid passing through the drain pathway 202. The drain filter element 250 is in fluid communication with the central opening 246 of the flow tube 240. In particular, the drain filter element 250 has drain media assembly 252 in fluid communication with the central opening 246 of the flow tube 240. The drain media assembly 252 is configured to filter fluid flowing through the drain pathway 202.

The drain filter element 250 is sealably coupled to the flow tube 240. The drain filter element 250 can be sealably coupled to the second endcap 230. The drain filter element 250 can have a variety of different configurations. In the current example, the drain media assembly 252 is disposed about the central axis x and defines an upstream volume 251 about the central axis x. The drain media assembly 252 extends in the longitudinal direction between a first drain filter endcap 254 and a second drain filter endcap 256. The first drain filter endcap 254 defines a first potting structure 259 configured to receive a first end of the drain media assembly 252, and the second drain filter endcap 256 defines a second potting structure 257 that is configured to receive a second end of the drain media assembly 252. The first drain filter endcap 254 defines a drain filter inlet 255 to the drain filter element 250 that is configured to sealably receive the flow tube 240. In particular, the flow tube 240 is sealably coupled to the drain filter element 250 about the drain filter inlet 255. The second drain filter endcap 256 forms a fluid barrier across the upstream volume 251 to define the drain pathway 202 through the drain media assembly 252.

The drain filter element 250 is coupled to the second endcap 230 and extends longitudinally outward from the filter element 100. In the current example, the first drain filter endcap 254 is a unitary, cohesive structure with the second endcap 230. As such, the drain filter element 250 is coupled to the second endcap 230. In some other embodiments the first drain filter endcap 254 can be a separate component from the second endcap 230.

The drain media assembly 252, similar to the filter media 211 of the filter media assembly 210, can be pleated filter media or wrapped filter media, as examples. However, in some other configurations the drain media assembly can be arranged as a media pack for straight-through flow rather than radial flow. The drain media assembly 252 can be a variety of types of filter media and can incorporate multiple layers of filter media. In some embodiments, the drain media assembly 252 is configured to have a lower pressure drop across the drain media assembly 252 as compared to the filter media 211 defining the filtration pathway 204. In some embodiments the drain media assembly 252 is configured to have a lower particle filtration efficiency than the filter media 211 defining the filtration pathway 204. In some embodiments the drain media assembly 252 is configured to have a high permeability than the filter media 211 defining the filtration pathway 204.

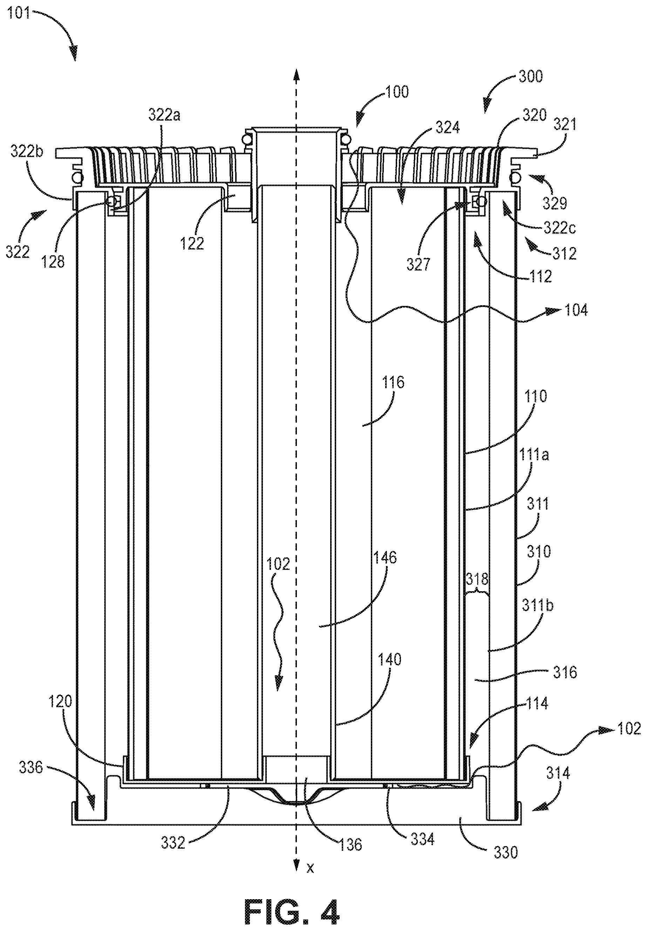

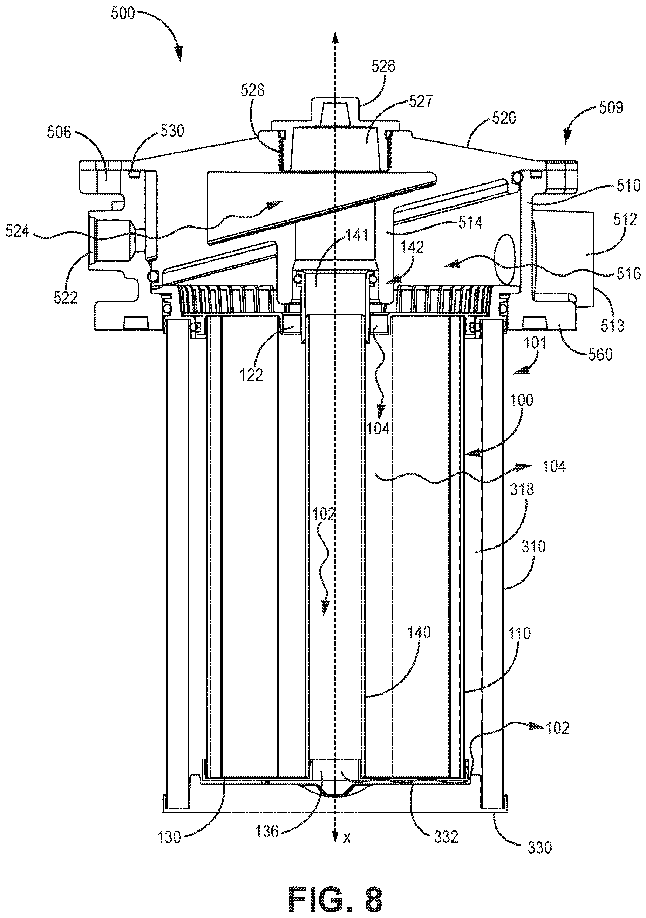

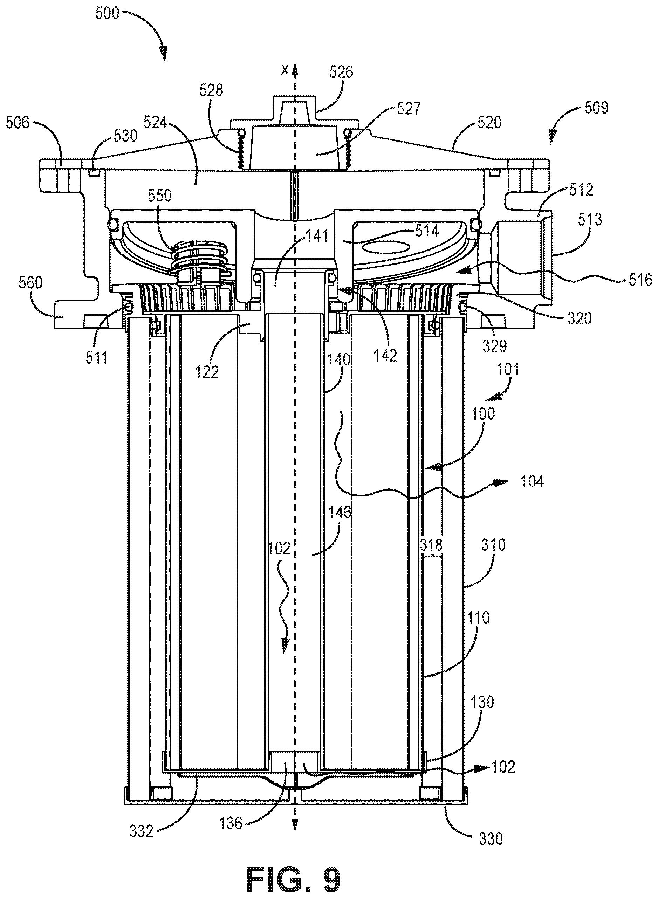

FIG. 4 is a cross-sectional view of an example filter assembly 101 consistent with the technology disclosed herein. The filter assembly 101 is generally configured to be installed in a fluid filtration system, which will be described in more detail below with respect to FIGS. 8 and 9. The filter assembly 101 has a primary filter element 100 and a secondary filter element 300. Here the secondary filter element 300 surrounds the primary filter element 100. The primary filter element 100 is consistent with the depictions of the filter element of FIGS. 1-2 and the corresponding description.

The secondary filter element 300 has a secondary media assembly 310 having a third end 312 and fourth end 314. The third end 312 is positioned towards the first end 112 of the filter media assembly 110 of the primary filter element 100 (hereinafter referred to as the "primary media assembly") and the fourth end 314 is positioned towards the second end 114 of the primary media assembly 110. The secondary media assembly 310 defines a cavity 316 extending from the third end 312 to the fourth end 314. The cavity 316 receives the primary filter element 100. An element gap 318 can be defined between the outer circumferential limit 111a of the filter media assembly 110 and an inner circumferential limit 311b defined by the secondary media assembly 310. The element gap 318 can extend in the radial direction between the outer circumferential limit 111a of the filter media assembly 110 and an inner circumferential limit 311b defined by the secondary media assembly 310.

In some embodiments, the secondary media assembly 310 can be configured to facilitate deaeration of the liquid filtered by the primary filter element 100. In some embodiments, the secondary media assembly 310 is configured to filter bypass fluid. In various embodiments, the secondary media assembly 310 has a higher permeability than the primary media assembly 110. In various embodiments, the primary media assembly 110 has a higher particle filtration efficiency than the secondary media assembly 310. In some embodiments the secondary media assembly 310 can have an particle filtration efficiency sufficient to meet minimum filtration requirements for bypass fluid.

The secondary media assembly 310 can be constructed of various different types of filter media and combinations of filter media. In some embodiments, the secondary media assembly 310 is constructed of a woven material. In some embodiments, the secondary media assembly 310 is constructed of a non-woven material. The secondary media assembly 310 can have a structural support layer 311 that defines an outer radial boundary of the secondary media assembly 310. The structural support layer 311 is configured to prevent burst of the other layers of the secondary media assembly 310. The description of the structural support 113 of the primary media assembly 110 above (with reference to FIGS. 1-2) applies to the structural support layer 311 as well. In some embodiments a structural support layer 311 can be omitted, and in other embodiments multiple structural support layers can be incorporated in the filter assembly 101. In some embodiments the structural support layer 311 can also help facilitate the deaeration of the filtered fluid.

In embodiments, the secondary media assembly 310 is made from a woven metallic mesh, such as stainless steel mesh. In some embodiments, the secondary media assembly 310 has a pleated wire mesh. The pleated wire mesh can be stainless steel. In some embodiments, the secondary media assembly 310 has a multiple layers of wire mesh. For example, the secondary media assembly 310 can be constructed with a first layer of wire mesh abutting a second layer of wire mesh. In some examples, the secondary media assembly 310 is constructed of a first layer of stainless steel wire mesh abutting a second layer of carbon steel mesh that are pleated. In embodiments where the secondary media assembly 310 is multiple layers of wire mesh, the layers of wire mesh can be co-pleated. In some embodiments, the fibers (for example metallic fibers) are coated. Polymeric or non-polymeric coatings, such as resins, can be used. The secondary media assembly 310 can be arranged in a tubular shape.

A third endcap 320 is coupled to the third end 312 of the secondary media assembly 310 and is configured to couple to a filtration system. The third endcap 320 has a radial rim 321 on one longitudinal end and a third potting structure 322 on an opposite longitudinal end. The third potting structure 322 forms a receiving channel that is configured to receive the third end 312 of the secondary media assembly 310. The radial potting structure 322 has an inner circumferential flange 322a, an outer circumferential flange 322b, and an annular surface 322c adjoining the inner and outer circumferential flanges 322a, 322b. The inner and outer circumferential flanges 322a, 322b extend in the longitudinal direction about the longitudinal axis x.

The third endcap 320 defines a third endcap opening 324 (where "third endcap" is used to modify "opening" herein because the opening is defined by the third endcap) that is configured to receive the primary filter element 100. The third endcap 320 has an inner circumferential sealing surface 327 that is configured to form a fluid seal with the outer circumferential sealing surface 128 of the first endcap 120. The inner circumferential seal surface 327 projects radially into the cavity 316. The third endcap 320 also defines an outer circumferential sealing surface 329 that is configured to form a seal with system components, which is depicted in FIG. 8 and will be explained below. The outer circumferential sealing surface 329 of the third endcap 320 is similar to that described above with respect to the outer circumferential sealing surface 128 of the first endcap 120.

A fourth endcap 330 is coupled to the fourth end 314 of the secondary media assembly 310. The fourth endcap 330 has a media potting structure 336 that is configured to receive the fourth end 314 of the secondary media assembly 310. The fourth endcap 330 forms a fluid barrier across the cavity 316. In some embodiments a relief valve can be incorporated in the fourth endcap 330 that is configured to open at a threshold pressure within the secondary filter element 300.

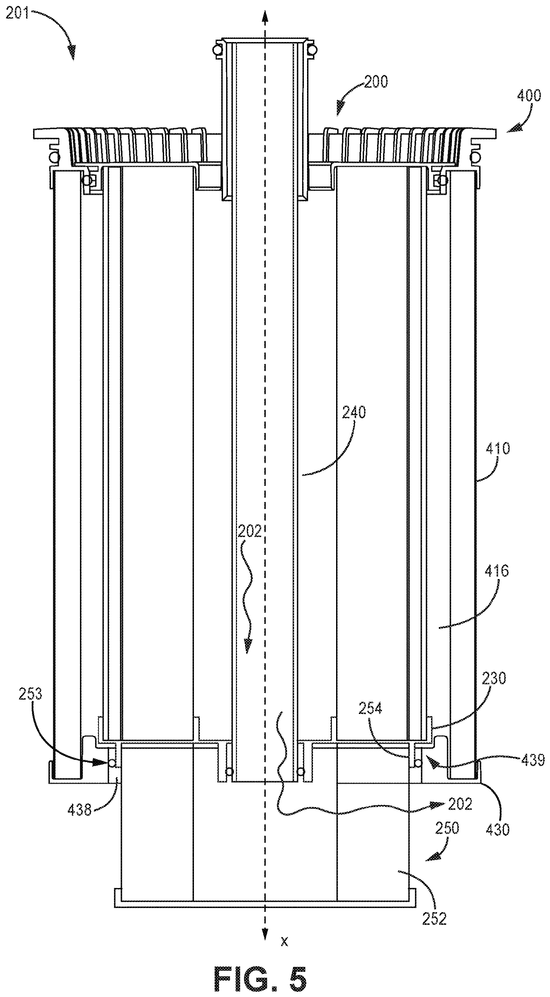

In the current example, the second endcap opening 136 of the primary filter element 100 brings the central opening 146 of the flow tube 140 into direct fluid communication with a flow gap 332 defined between the fourth endcap 330 and the second endcap 130. The flow gap 332 defines a portion of the drain pathway 102 extending from the second endcap opening 136 to the secondary media assembly 310. As such, the secondary media assembly 310 is a drain filter, which is contrasted with the configuration of FIG. 3 described above (and FIG. 5 described below) that has a separate drain filter. Spacers 334 can be disposed between the fourth endcap 330 and the second endcap 130 to maintain the flow gap 332. The spacers 334 can extend in the longitudinal direction between the fourth endcap 330 and the second endcap 130.

As discussed above, the filtration pathway 104 extends from the first passageway opening 122 through the filter media assembly 110 via the central passageway 116. However, in the current example the filtration pathway 104 additionally extends radially outward from the filter media assembly 110 through the element gap 318 and the secondary media assembly 310. As such, while the drain pathway 102 and the filtration pathway 104 are separated in the primary filter element 100, the filtration pathway 104 merges with the drain pathway 102 outside of the primary filter element 100.

FIG. 5 is an alternate configuration of a filter assembly 201 consistent with various embodiments. The filter assembly 201 incorporates a primary filter element 200 that is consistent with the filter element 200 having a drain filter element 250 discussed above with reference to FIG. 3. The filter assembly 201 also incorporates a secondary filter element 400 that is generally consistent with the secondary filter element 300 discussed above with reference to FIG. 4, except where such features and functionalities are inconsistent with the current description.

The primary filter element 200 is disposed in the secondary media assembly 410 of the secondary filter element 400. In the current example, the drain filter element 250 of the primary filter element 200 is coupled to the second endcap 230 and the fourth endcap 430. Instead of extending across the cavity 416, in this example the fourth endcap 430 defines a central opening 438 that receives the drain filter element 250. The fourth endcap 430 has an inner circumferential seal surface 439 that forms a seal with an outer circumferential seal surface 253 of the first drain filter endcap 254. Here, as discussed above with reference to FIG. 3, the first drain filter endcap 254 is a portion of the second endcap 230 of the primary filter element 200. In some alternative embodiments where the first drain filter endcap is a separate component from the second endcap, an inner circumferential seal surface of the fourth endcap can form a seal with a mating surface of the second endcap. Similar to the example of FIG. 3, here the drain pathway 202 extends through the flow tube 240 and the drain filter element 250. It is noted that the drain pathway 202 also extends through the fourth endcap 430.

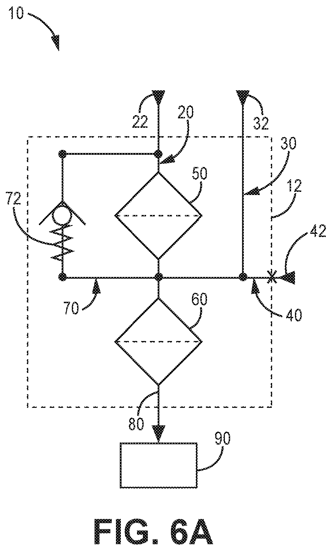

FIG. 6A is a schematic of an example system 10 consistent with the technology disclosed herein. The system 10 can be consistent with a hydraulic system in various implementations. The system 10 can be consistent with tank assemblies which are described herein. The system 10 has a filter assembly 12 having a primary media assembly 50, a secondary media assembly 60, a filter assembly outlet 80, a filtration pathway 20, a bypass pathway 70, a drain pathway 30, and a fill port pathway 40.

The primary media assembly 50 and the secondary media assembly 60 are generally consistent with primary and secondary filter media assemblies disclosed elsewhere herein. The primary media assembly 50 can be a component of a primary filter element and the secondary media assembly 60 can be a component of a secondary filter element as described herein. The secondary media assembly 60 is configured to be in fluid communication with the primary media assembly 50. The secondary media assembly 60 is also in fluid communication with the filter assembly outlet 80. In various embodiments the secondary media assembly 60 is in direct fluid communication with the filter assembly outlet 80, such as where the downstream side of the secondary media assembly 60 defines the filter assembly outlet 80. In various embodiments, the filter assembly outlet 80 leads to a fluid tank 90, such as a hydraulic fluid tank.

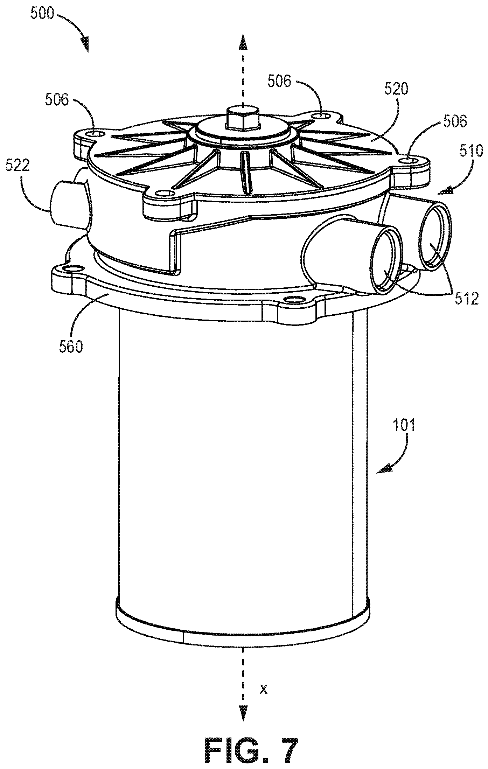

The filtration pathway 20 extends through the primary media assembly 50, the secondary media assembly 60, and the filter assembly 80. The filtration pathway 20 can be configured to receive hydraulic fluid from an implement 22 in the system 10 and return the hydraulic fluid to the fluid tank 90. The secondary media assembly 60 is positioned downstream of the primary media assembly 50 along the filtration pathway 20. The filtration pathway 20 can be consistent with discussions below with reference to FIGS. 7-10.

In various embodiments a bypass pathway 70 extends from the filtration pathway 20 through the secondary media assembly 60 and the filter assembly 80. The bypass pathway 70 bypasses the primary media assembly 50, meaning that the bypass pathway 70 does not extend through the primary media assembly 50. The bypass pathway 70 can have a bypass valve 72 in fluid communication with the filtration pathway 20. The bypass valve 72 can generally obstruct the bypass pathway 70 and, when fluid pressure in the filtration pathway 20 exceeds a minimum, the bypass valve 72 can open such that fluid flow bypasses the primary media assembly 50. In various embodiments the bypass pathway 70 overlaps or merges with the drain pathway 30. In some embodiments the bypass pathway 70 overlaps or merges with the fill port pathway 40. The bypass valve 72 can be consistent with bypass valves described below with reference to FIGS. 9 and elsewhere in the current application. In some embodiments the bypass valve 72 and the bypass pathway 70 can be omitted from the system 10. While a single bypass valve 72 is depicted and discussed in this disclosure, it will be appreciated that multiple bypass valves can be incorporated in the system.

The drain pathway 30 extends through the secondary media assembly 60 and the filter assembly outlet 80. The drain pathway 30 circumvents the primary media assembly 50, meaning that the drain pathway 30 is not filtered by the primary media assembly 50 even though the drain pathway 30 may physically pass through the primary filter element that has the primary media assembly 50 (such as shown and described, for example, with reference to FIGS. 4 and 5). In various embodiments, the drain pathway 30 is configured to receive fluid leakage from a motor, pump, valve, or other component casing 32 of the hydraulic system. In various embodiments the drain is a case drain. Drain pathways are described further below. In some embodiments the drain pathway 30 and the filtration pathway 20 merge downstream of the primary media assembly 50.

The fill port pathway 40 extends from a fill port 42 through the secondary media assembly 60 and the filter assembly outlet 80. The fill port 42 is generally configured to receive fluid that is added to the system 10 by a user. The fill port pathway 40 bypasses/circumvents/does not pass through the primary media assembly 50. In various embodiments, the fill port pathway 40 and the drain pathway 30 overlap. In some embodiments, the fill port pathway and the drain pathway do not overlap. In some embodiments the fill port and the fill port pathway are omitted. Example fill ports are described in more detail, below.

The secondary media assembly 60 can be multiple filter media assemblies. For example, as discussed above with reference to FIG. 5, a filtration pathway can extend through one secondary media assembly downstream of a primary filter media and a drain pathway can extend through another secondary media assembly that is a drain filter element, which can be similar to that disclosed with reference to FIG. 5.

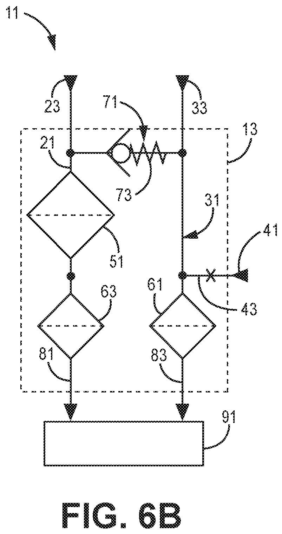

FIG. 6B is a schematic of an example system 11 consistent with the technology disclosed herein. The system 11 can be consistent with a hydraulic system in various implementations. The system 11 can be consistent with tank assemblies which are described herein. The system 11 has a filter assembly 13 having a primary media assembly 51, a secondary media assembly 63, a filtration pathway 21, a drain pathway 31, a filtration pathway outlet 81 and a drain pathway outlet 83.

The primary media assembly 51 and the secondary media assembly 63 are generally consistent with primary and secondary filter media assemblies disclosed elsewhere herein. The primary media assembly 51 can be a component of a primary filter element and the secondary media assembly 63 can be a component of a secondary filter element as described herein. The secondary media assembly 63 is configured to be in fluid communication with the primary media assembly 51. The secondary media assembly 63 is in fluid communication the filtration pathway outlet 81. The filtration pathway outlet 81 is downstream of the secondary media assembly 63. In various embodiments the secondary media assembly 61 is in direct fluid communication with the filtration pathway outlet 81, such as where the downstream side of the secondary media assembly 61 defines the filtration pathway outlet 81. In various embodiments, the filtration pathway outlet 81 leads to a fluid tank 91, such as a hydraulic fluid tank.

The filtration pathway 21 extends through the primary media assembly 51, the secondary media assembly 63, and the filtration pathway outlet 81. The filtration pathway 21 can be configured to receive hydraulic fluid from an implement 23 in the system 11 and return the hydraulic fluid to the fluid tank 91. The secondary media assembly 63 is positioned downstream of the primary media assembly 51 along the filtration pathway 21. The filtration pathway 21 can be consistent with discussions herein.

The drain pathway 31 extends to the drain pathway outlet 83. A drain media assembly 61 is disposed across the drain pathway 31. Fluid flowing through the drain pathway 31 is filtered by the drain media assembly 61. The drain pathway outlet 83 can be defined by, for example, a downstream side of the drain media assembly 61. The drain pathway outlet 83 and the filtration pathway outlet 81 are configured to merge, such as in the fluid tank 91. The drain pathway 31 circumvents the primary media assembly 51, meaning that the drain pathway 31 is not filtered by the primary media assembly 51 even though the drain pathway 31 may physically pass through the primary filter element that has the primary media assembly 51 (such as shown and described, for example, with reference to FIGS. 4 and 5). In various embodiments, the drain pathway 31 is configured to receive fluid leakage from a motor, pump, valve, or other component casing 33 of the hydraulic system. In various embodiments the fluid leakage is from a case drain. Drain pathways are described further below. In this example the drain pathway 31 is generally separated from the filtration pathway 21 upstream of the drain pathway outlet 83.

The filter assembly 13 generally has at least one fluid flow pathway 71/41 selectively extending to the drain pathway 31 upstream of the drain media assembly 61. The fluid flow pathway 71/41 is configured to circumvent the primary media assembly 51, meaning that the fluid flow pathway 71/41 does not extend through the primary media assembly 51. In some embodiments the fluid flow pathway 71/41 is in selective fluid communication with the filtration pathway 21.

In various embodiments, the fluid flow pathway is a bypass pathway 71 that selectively extends from the filtration pathway 21 to the drain pathway 31. The bypass pathway 71 is configured to selectively bypass the primary media assembly 51, meaning that the bypass pathway 71 does not extend through the primary media assembly 51. The bypass pathway 71 extends from a position upstream of the primary media assembly 51 to a position upstream of the drain media assembly 61. The bypass pathway 71 can have a bypass valve 73 in fluid communication with the filtration pathway 21. The bypass valve 72 can generally obstruct the bypass pathway 71 and, when fluid pressure in the filtration pathway 21 exceeds a minimum, the bypass valve 73 opens such that fluid flow bypasses the primary media assembly 51. In various embodiments the bypass pathway 71 merges with the drain pathway 31. The bypass valve 73 can be consistent with bypass valves described herein.

In some embodiments, , the fluid flow pathway is a fill port pathway 43 that extends from a fill port 41 through the drain media assembly 61 and the drain pathway outlet 83. The fill port 41 is generally configured to receive fluid that is added to the system 11 via the filter assembly 13 by a user. The fill port pathway 43 is selectively openable by a user. The fill port pathway 43 circumvents, or does not pass through, the primary media assembly 51. In various embodiments, the fill port pathway 43 merges with the drain pathway 31. Example fill ports are described in more detail throughout this description. In some embodiments, such as the one depicted here, the bypass pathway 71 merges with the fill port pathway 43.

In some alternate examples, the bypass pathway can be configured similarly to the example described with reference to FIG. 6A, where the bypass pathway is configured to bypass the primary media assembly and extend to the secondary media assembly. Similarly, in some alternate configurations the fill port pathway 43 is configured to extend to the secondary media assembly 63 rather than the drain media assembly 61. In some alternate embodiments the fill port and the fill port pathway are omitted. In some embodiments the bypass pathway is omitted.

The secondary media assembly 63 can be multiple types of filter media assemblies as is described elsewhere herein. The drain media assembly 61 can be consistent with drain media assemblies as is described herein such as with respect to FIG. 3.

FIG. 7 is a perspective view of an example system consistent with the technology disclosed herein. The system has a filter cover assembly 509 and a filter assembly 101, such as the filter assembly 101 discussed above with reference to FIG. 4. FIG. 8 is an example first cross-sectional view of the example system of FIG. 7. FIG. 9 is an example second cross-sectional view of the example system of FIG. 7. FIGS. 7-9 can be viewed together in reference to the following description.

The system 500 can be consistent with a hydraulic system. In particular, the filter media assemblies 110, 310 of the filter assembly 101 can be disposed in a fluid tank. The system 500 has a filter cover assembly 509 that has a filter head 510 that is configured to couple to a filter assembly 101. The filter head 510 defines a flange 560 that is configured to be coupled to a tank about a tank opening. The filter cover assembly 509 also has a filter cover 520 that is configured to detachably couple to the filter head 510. The filter cover 520 is coupled to the filter head 510 via the mating features 506 which, in the current example, are fastener openings 506 defined by the filter head 510 and the filter cover 520. The fastener openings 506 are configured to receive a fastener, such as a screw or a bolt. The filter cover 520 and the filter head 510 define a circumferential sealing region 530 that forms a seal between the filter cover 520 and the filter head 510. The circumferential sealing region 530 is extends around the central axis x.

The filter cover assembly 509 is configured to be removably coupled to the primary filter element 100. In the current example, the filter cover assembly 509 is configured to be removably coupled to the filter assembly 101 and, therefore the primary filter element 100. The outer circumferential sealing surface 329 about the third endcap 320 forms a seal with a corresponding structure of the filter cover assembly and, more specifically, the filter head 510. The corresponding structure of the filter head 510 is an inner radial sealing surface 511, in the current example. Also, the flow tube 140 is configured to be sealably coupled to the filter cover assembly 509. In particular, in this example, the filter cover 520 has a first tube connector 514 that is configured to sealably couple to the first tube end 142 of the flow tube 140 about the first tube opening 141.

While FIGS. 8-9 depict one example configuration, other configurations are also contemplated to couple the filter cover assembly 509 to the filter assembly 101. For example, in embodiments where the first tube end (142) is positioned between the first endcap (120) and the second endcap (130), the first tube connector (514) may be configured to extend into the central opening of the filter media assembly (110).

The filter cover assembly 509 defines a filtration pathway 516 and a drain pathway 524 separated from the filtration pathway 516 (visible in FIG. 8). More specifically, the filter cover 520 and the filter head 510 cumulatively define a filtration pathway 516 and a drain pathway 524 separated from the filtration pathway 516. In various embodiments, the filtration pathway 516 is configured to receive hydraulic fluid that is returned to the fluid tank from an implement in the hydraulic system. In various embodiments, the drain pathway 524 is configured to receive fluid leakage from a motor, pump, valve or other component of the hydraulic system.

One or more conduits 512, 522 extend from a filtration pathway 516 and a drain pathway 524 is separated from the filtration pathway 516. In particular, the filter cover assembly 509 defines a drain conduit 522 (defined specifically by the filter cover 520) and a fluid return conduit 512 (defined specifically by the filter head 510). The drain pathway 524 extends from the drain conduit 522 to the first tube opening 141 defined on the first tube end 142 of the flow tube 140. The drain pathway 524 defines a portion of the drain pathway 102 discussed above with reference to FIGS. 2 and 4. As such, the drain pathway 102 extends from the drain conduit 522, through the filter cover assembly 509, through the first tube connector 514 and the first tube opening 141, along the flow tube 140, out the second endcap opening 136, radially outward from the second endcap opening 136 through the flow gap 332 between the second endcap 130 and the fourth endcap 330, and radially outward through the secondary media assembly 310. As such, in examples consistent with the current example, the secondary filter element 300 is a drain filter element.

It is noted that the flow tube 140 allows the drain pathway 524 to avoid flow through the primary media assembly 110. The flow tube 140 fluidly couples the drain pathway 524 and the drain filter element 300, which is the secondary filter element 300. The specific configuration of the drain pathway 102 can have various advantages. For example, routing the flow tube 140 (and, therefore, the drain pathway 102) outside of the filter assembly 101 can prevent air in the flow tube 140 from accumulating in the filter assembly 101. Routing the flow tube (and, therefore, the drain pathway 102) outside of the filter assembly 101 also can reduce the fluid pressure across the drain pathway 102, which lowers the fluid pressure on the motor casing (or other component housings upstream of the drain pathway 102). Furthermore, routing the flow tube 140 to the bottom of the primary and secondary filter elements 100, 300 limits further aerating of the fluid in the fluid tank compared to fluid introduced to the fluid tank towards the top of the filter elements 100, 300, where gravity would increase the impact between the drain fluid and any fluid in the fluid tank. The fluid seal 128, 327 between the primary filter element 100 and the secondary filter element 300 prevents air in the element gap 318 between the filter elements 100, 300 from entering the filter cover assembly 509 such that eventually, the air will pass through the secondary media assembly 310 into the fluid tank.

The filtration pathway 516 extends from a fluid return inlet 513 defined by the fluid return conduit 512 to first endcap 120, and specifically the first passageway opening 122 defined by the first endcap 120 and the primary media assembly 110. The filtration pathway 516 forms a portion of the filtration pathway 104 discussed above with reference to FIGS. 2 and 4. As such, the filtration pathway 104 extends from the fluid return conduit 512, through the filter cover assembly 509 (more specifically the filter head 510), the first passageway opening 122, through the central passageway 116 (outside of the flow tube 140), and radially outward through the primary media assembly 110 and the secondary media assembly 310.

In the current example system 500, the filter cover assembly 509 defines a fill port 527 in selective fluid communication with the drain pathway 524. A removable cover 526 is removably disposed across the fill port 527. The removable cover 526 can be selectively removed by a user for adding fluid, such as hydraulic fluid, to the system 500. An advantage of configuring the fill port 527 to be in fluid communication with a drain pathway 524 is that new fluid added to the system is filtered through the drain filter (which is the secondary filter here). In the current example, the removable cover 526 and the filter cover assembly 509 mutually engage through mating threads 528. The removable cover 526 can be decoupled from the filter cover assembly 509 through manual rotation of the removable cover 526 relative to the filter cover assembly 509 that disengages the mating threads 528.

While in the current example, the filter cover assembly 509 has the filter cover 520 coupled to a filter head 510, in some embodiments the filter cover assembly has a filter cover without a filter head. In such embodiments, the filter cover can be installed directly into the fluid tank. The filter cover assembly is generally configured to interface with the filter cartridge and direct the drain flow and the filtration flow to the relevant flow paths defined by the filter elements.

In various embodiments, including the example depicted in FIG. 9, the filtration system has a bypass valve 550 disposed between the drain pathway 524 and the filtration pathway 516. In particular, the filter cover assembly 509 has the bypass valve 550. The bypass valve 550 selectively directs fluid flow from the filtration pathway 516 to the drain pathway 524 in the event that the fluid pressure in the filtration pathway 516 exceeds a threshold value. As such, bypass fluid flow enters the drain pathway 102 and is filtered by the secondary media assembly 310. This can be an advantage compared to systems having no filter for bypass fluid flow. In some embodiments a bypass valve 550 can be omitted.

While the currently-depicted and currently-discussed example has a primary filter element 100 and a secondary filter element 300, in various implementation of the current technology can omit the secondary filter element 300. A secondary filter element could be omitted where, for example, a drain filter is incorporated in the filter element (such as described in accordance with FIG. 3)

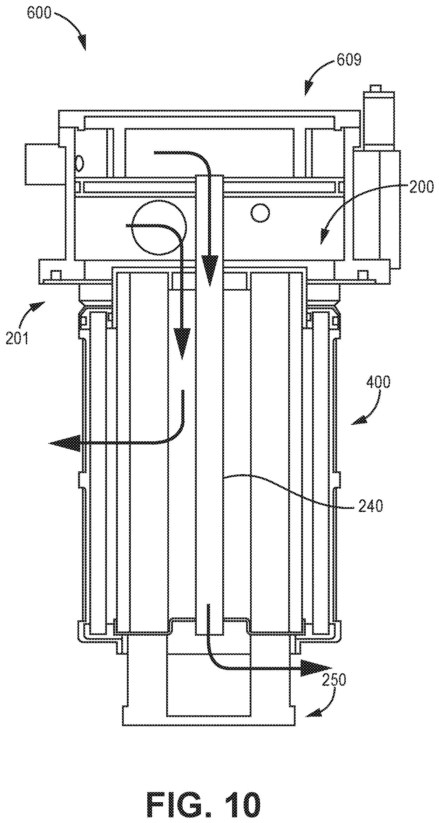

FIG. 10 is a simplified schematic cross-sectional view of yet another example system 600 consistent with the technology disclosed herein. A filter element 200 similar to those described with reference to FIG. 3 is coupled to a filter cover assembly 609. The filter cover assembly 609 is similar to that filter cover assembly 509 described above with reference to FIGS. 7-9.

Unlike the examples of FIG. 7-8, here the drain filter element 250 is a separate component from the secondary filter element 400. The drain filter element 250 is coupled to the filter cover assembly 609 via the drain filter element 250 being coupled to filter assembly 201 (in particular, the primary filter element 200 and the secondary filter element 400), which is coupled to the filter cover assembly 609. While in the current example, the flow tube 240 extends into the filter cover assembly 609, in some other embodiments the filter cover assembly can have a flow tube connector that extends into the primary media assembly to couple to the flow tube.

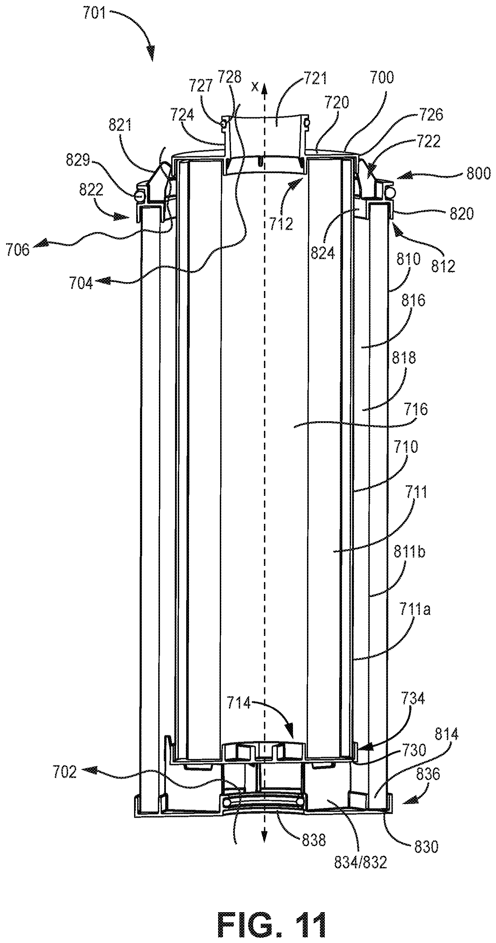

FIG. 11 is a cross-sectional view of yet another example filter assembly 701 consistent with the technology disclosed herein. The filter assembly 701 is generally configured to be installed in a fluid filtration system, which will be described in more detail below. The filter assembly 701 has a primary filter element 700 and a secondary filter element 800. Here the secondary filter element 800 surrounds the primary filter element 700. The example filter assembly 701 has a central axis x that extends in the longitudinal direction.

The primary filter element 700 has a primary media assembly 710 defining a central passageway 716, a first endcap 720 coupled to a first media end 712 of the primary media assembly 710, a second endcap 730 coupled to a second media end 714 of the primary media assembly 710. The primary media assembly 710 is generally configured to filter a fluid and can be consistent with the description of other filter media assemblies described above and, as such, has filter media 711 and optional structural supports.

The first endcap 720 is generally configured to retain the first media end 712 of the primary media assembly 710 such as via a media potting structure that can be consistent with descriptions above. The first endcap 720 defines a portion of a filtration pathway 704 through the primary media assembly 710. In particular, the first endcap 720 defines a first endcap opening 721 extending from outside the filter assembly 701 to the central passageway 716 in the longitudinal direction.

The first endcap 720 has a circumferential sealing surface 728 about the longitudinal axis x that is configured to form a seal with filtration system components, which will be described in more detail, below. The circumferential sealing surface 728 shares the central axis x of the primary media assembly 710 and central passageway 716. The circumferential sealing surface 728 can be a circumferential cavity that is configured to receive an elastomeric component, such as an o-ring 727. In some embodiments the circumferential cavity is discontinuous, while in other embodiments the circumferential cavity is continuous. In the current embodiment, the circumferential sealing surface 728 is about the first endcap opening 721. In particular, the first endcap 720 defines a tubular extension 724 about the first endcap opening 721 that extends longitudinally outward from the first endcap 720. The circumferential sealing surface 728 is defined about the outer radial surface of the tubular extension 724, but in some embodiments the circumferential sealing surface can be defined about an inner radial surface of the tubular extension.

The second endcap 730 is generally configured to retain the second media end 714 of the primary media assembly 710 and can have a second media potting structure 734 as described herein. The second endcap 730 defines a portion of the filtration pathway 704 through the primary media assembly 710. In particular, the second endcap 730 obstructs the central passageway 716.

In the current example, the filter element lacks a flow tube that defines a portion of a drain pathway, as described above with reference to other figures. Unlike some other embodiments herein, in this example the entire central passageway 716 defines a portion of the filtration pathway 704. Similarly the entire first endcap opening 721 defines a portion of the filtration pathway 704. In the current example, a drain pathway 702 is defined outside of the primary filter element 700, such that the drain pathway 702 is separated from the filtration pathway 704 within the primary media assembly 710, which will be described in more detail, below.

The secondary filter element 800 has a secondary media assembly 810 having a third end 812 and fourth end 814. The third end 812 is positioned towards the first end 712 of the primary media assembly 710 and the fourth end 814 is positioned towards the second end 714 of the primary media assembly 710. The secondary media assembly 810 defines a cavity 816 extending from the third end 812 to the fourth end 814. The cavity 816 receives the primary filter element 700. An element gap 818 can be defined between an outer circumferential limit 711a of the primary media assembly 710 and an inner circumferential limit 811b defined by the secondary media assembly 810. The element gap 818 can be in the radial direction between an outer circumferential limit 711a of the primary media assembly 710 and an inner circumferential limit 811b defined by the secondary media assembly 810. The secondary media assembly 810 is generally configured consistently with the descriptions of other secondary filter media assemblies discussed above.

A third endcap 820 is coupled to the third end 812 of the secondary media assembly 810 and is configured to couple to a filtration system. The third endcap 820 has a third potting structure 822 on one longitudinal end of the third endcap 820. The third potting structure 822 can be consistent with others described herein. The third endcap 820 has a plurality of inwardly directed radial ribs 821 extending from the third potting structure 822 to an outer surface 726 of the first endcap 720. The radial ribs 821 are on an opposite longitudinal end of the third endcap 820 relative to the third potting structure 822. The third endcap 820 does not have a radial rim that has been discussed in previous examples.

The third endcap 820 defines a third endcap opening 824 that is configured to receive the primary filter element 700. In this embodiment, the third endcap 820 does not form a fluid seal with an outer circumferential sealing surface of the first endcap 720. Rather, the third endcap 820 and the primary filter element 700 defines an endcap gap 722 therebetween. The endcap gap 722 can extend in the radial direction between the third endcap 820 and the primary filter element 700. A fluid flow pathway 706 extends from the endcap gap 722 into the element gap 818 between the primary media assembly 710 and the secondary media assembly 810, and out through the secondary media assembly 810. As such, the endcap gap 722 can define a portion of the fluid flow pathway 706 such as an inlet 722 of the fluid flow pathway 706 to the filter assembly 701. In this example the fluid flow pathway 706 merges with the drain pathway 702 in the element gap 818. In some alternate embodiments, the fluid flow pathway and the drain pathway can both extend through one of the third endcap and the fourth endcap to the secondary media assembly 810.

In the current example, the endcap gap 722 can be a plurality of discrete openings defined between the third endcap 820 and the first endcap 720, where the plurality of ribs separate each of the discrete openings that cumulatively define the endcap gap 722. The plurality of discrete openings are defined about the central axis x. The endcap gap 722 extends circumferentially around the first endcap opening 721. As such, the inlet 722 has an outer diameter that is larger than an outer diameter of the first endcap opening 721.

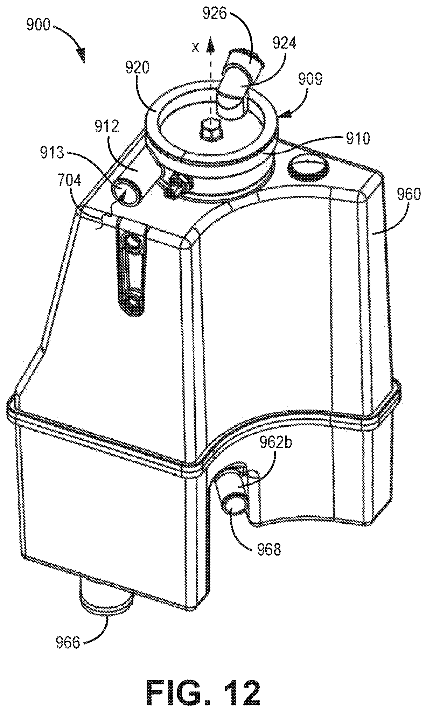

The third endcap 820 also defines an outer circumferential sealing surface 829 that is configured to form a seal with system components, which is depicted in FIG. 12 and will be explained below. The outer circumferential sealing surface 829 of the third endcap 820 is similar to corresponding features of other assemblies described above.

A fourth endcap 830 is coupled to the fourth end 814 of the secondary media assembly 810. The fourth endcap 830 has a media potting structure 836 that is configured to receive the fourth end 814 of the secondary media assembly 810, consistently with previously-described embodiments. In the current example, the fourth endcap 830 does not form a fluid barrier across the cavity 816. Rather, the drain pathway 702 extends through the fourth endcap 830. In particular, the fourth endcap 830 defines a fourth endcap opening 838 that is a drain pathway inlet of the filter assembly 701. The drain pathway 702 extends from the fourth endcap opening 838, through the cavity 816, and out through the secondary media assembly 810. As such, the secondary media assembly 810 serves as a drain filter. Spacers 834 can be disposed between the fourth endcap 830 and the second endcap 730 to maintain a flow gap 832 therebetween. The spacers 834 can extend in the longitudinal direction between the fourth endcap 830 and the second endcap 730.

In the current example, the filter assembly 701 defines a filtration pathway 704, a drain pathway 702, and a fluid flow pathway 706. The filtration pathway 704 extends through the primary media assembly 710 and the drain pathway 702 bypasses or circumvents (does not extend through) the primary media assembly 710. More broadly, the drain pathway 702 does not extend through the primary filter element 700. Similarly, the fluid flow pathway 706 circumvents the primary filter element 700 including the primary media assembly 710. The fluid flow pathway 706 can be consistent with a bypass pathway, a fill port pathway, or both a bypass pathway and a fill port pathway, as will be discussed in more detail, below. It is noted that the filtration pathway 704 merges with the drain pathway 702 and fluid flow pathway 706 downstream of the primary media assembly 710.

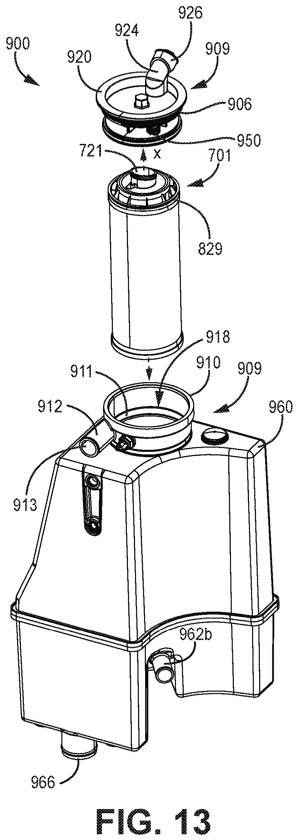

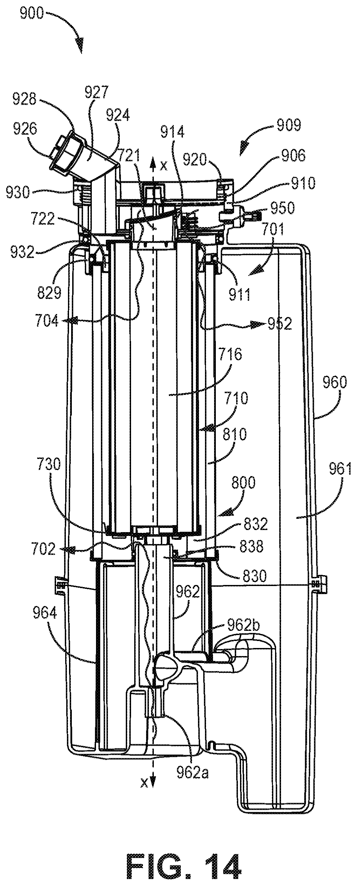

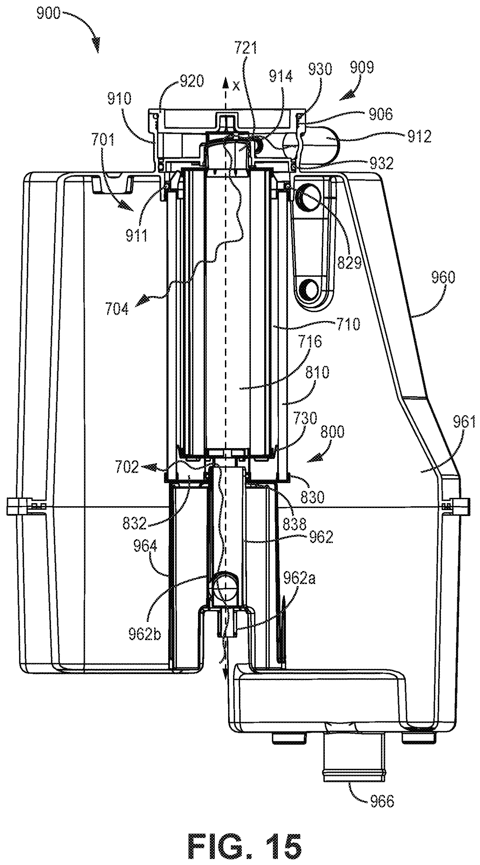

FIG. 12 is a perspective view of an example tank assembly 900 consistent with the technology disclosed herein and FIG. 13 is an exploded view of the example tank assembly 900. FIG. 14 is a first cross-sectional view of the example assembly 900 and FIG. 15 is a second cross-sectional view of the example assembly 900. The assembly has a tank 960, a filter cover assembly 909 and a filter assembly 701 (FIGS. 13-14), such as the filter assembly 701 discussed above with reference to FIG. 11. FIGS. 12-15 can be viewed together in reference to the following description.

The fluid tank 960 generally defines a fluid cavity 961 configured to receive a fluid and a filter assembly opening 918 (FIG. 13) that is configured to receive a filter assembly 701. In the current embodiment, the fluid tank 960 has a filter support platform 964 that is configured to support a portion of the filter assembly 701. Specifically, the filter support platform 964 is configured to support a bottom portion of the filter assembly 701. The fluid tank 960 also has a fluid outlet 966 that is configured to be in fluid communication with other system components, such as a fluid pump. The fluid tank 960 also defines a drain tank inlet 968

The filter assembly 701 is generally disposed in the fluid cavity 961 and is coupled to the tank 960 about the filter assembly opening 918 (FIG. 13). In the current example, the filter cover assembly 909 does not have a separate filter head, unlike some previously-described examples. Rather, in the current example a filter head structure 910 is defined by the tank 960 itself. The system 900 has a filter cover assembly 909 that has the filter head structure 910 that is configured to couple to the filter assembly 701. The filter cover assembly 909 also has a filter cover 920 that is configured to detachably couple to the filter head structure 910. The filter cover 920 is coupled to the filter head structure 910 via the mating features 906 which, in the current example, are mating threads 906 defined by the filter head structure 910 and the filter cover 920 about a central axis x. The filter cover assembly 909 and the filter support platform 964 can exert a compression force on the filter assembly 701 to secure the filter assembly 701 in position.

The filter cover 920 and the filter head structure 910 are configured to form at least one seal about the filter assembly opening 918 (FIG. 13). As visible in FIGS. 14 and 15, the filter cover 920 and the filter head structure 910 define a first circumferential sealing region 930 and a second circumferential sealing region 932. Each of the first circumferential sealing region 930 and the second circumferential sealing region 932 are configured to be disposed about the central axis x. The first circumferential sealing region 930 is positioned towards a distal longitudinal end of the mating threads 906 and/or a distal longitudinal end of the filter cover 920. The second circumferential sealing region 932 positioned towards the opposite longitudinal end of the filter cover 920.

The filter cover assembly 909 is configured to be removably coupled to the tank 960. In the current example, the filter cover assembly 909 is configured to be removably coupled to the filter assembly 701 and, therefore the primary filter element 700. The outer circumferential sealing surface 829 about the third endcap 820 forms a seal with a corresponding structure of the filter cover assembly 909 and, more specifically, the filter head structure 910 of the tank 960. The corresponding structure of the filter head structure 910 is an inner radial sealing surface 911, in the current example. In some alternate embodiments the third endcap can define an inner circumferential sealing surface and the corresponding structure of the filter head structure can be an outer circumferential sealing surface.

Also, the first endcap 720 is configured to be sealably coupled to the filter cover assembly 909 about the first endcap opening 721. In particular, in this example, the filter cover 920 has a first tube connector 914 that is configured to sealably couple to the circumferential sealing surface 728 of the tubular extension 724 about the first endcap opening 721 (which is the first inlet of the filter assembly 701). Other configurations are also contemplated to couple the filter cover assembly 909 to the filter assembly 701.

The tank assembly 900 defines a filtration pathway 704 that is visible in FIGS. 14-15. The filtration pathway 704 of the filter assembly 701 (FIG. 11) is a portion of the filtration pathway 704. The filter cover 920 and the filter head structure 910 defines a portion of the filtration pathway 704 between the first circumferential sealing region 930 and the second circumferential sealing region 932. The filter cover assembly 909 defines a filtration conduit 912 that defines a fluid return inlet 913 to the filtration pathway 704 of the tank assembly 900. In this particular embodiment, the filter head structure 910 defines the fluid return conduit 912, but in some other embodiments the filter cover 920 can define the fluid return conduit 912. In various embodiments, the filtration pathway 704 is configured to receive hydraulic fluid that is returned to the fluid tank 960 from an implement in the hydraulic system.

The tank assembly 900 is configured to selectively define a bypass pathway 952 (best visible in FIG. 14) that bypasses the primary filter element 700 and, in particular, the primary media assembly 710. The bypass pathway 952 selectively extends from the filtration pathway 704 through the secondary filter element 800 to a filter assembly outlet where the filter assembly outlet is the downstream face of the secondary filter element 800. In various embodiments, including the example depicted in FIGS. 13-15, the filtration system has a bypass valve 950 disposed between the filtration pathway 704 and the inlet 722 (which is referred to as the endcap gap 722, above) of fluid flow pathway 706 (FIG. 11) the filter assembly 701. In particular, the filter cover assembly 909 has the bypass valve 950. The bypass valve 950 selectively directs fluid flow from the filtration pathway 704 to the bypass pathway 952 in the event that the fluid pressure in the filtration pathway 704 exceeds a threshold value. As such, bypass fluid flow enters the bypass pathway 952 and is filtered by the secondary media assembly 810. This can be an advantage compared to systems having no filter for bypass fluid flow. In some embodiments a bypass valve 950 can be omitted.

In the current example tank assembly 900, the filter cover assembly 909 defines a fill port 927 in fluid communication with the fluid flow pathway 706. The fill port 927 can be in selective fluid communication with the bypass pathway 952. The fill port 927 can be positioned downstream of the bypass valve 950 along the bypass pathway 952 and thus can be isolated from the filtration pathway 704 upstream of the primary media assembly 710. The fill port 927 is defined by a fill port conduit 924 of the filter cover assembly 909. In normal operation, the fill port 927 is isolated from the filtration pathway 704 within the filter cover assembly 909. In the current embodiment the fill port 927 extends through the portion of the filtration pathway 704 downstream of the primary media assembly 710. An advantage of configuring the fill port 927 to be in fluid communication with bypass pathway 952 downstream of the bypass valve 950 is that new fluid added to the system is filtered through the secondary media assembly 810. In some embodiments the fill port 927 can be omitted.

A removable cover 926 is removably disposed on the fill port conduit 924 across the fill port 927. The removable cover 926 can be selectively removed by a user for adding fluid, such as hydraulic fluid, to the tank assembly 900. In the current example, the removable cover 926 and the filter cover assembly 909 mutually engage through mating threads 928 (FIG. 14). The removable cover 926 can be decoupled from the filter cover assembly 909 through manual rotation of the removable cover 926 relative to the filter cover assembly 909 that disengages the mating threads 928.

The tank assembly 900 also defines a drain pathway 702 which has been discussed in the context of the filter assembly 701 with respect to FIG. 11. The drain pathway 702 (FIGS. 14-15) extends through the tank 960 via one or more drain conduits 962, 962a, 962b to the fourth endcap opening 838. Minor conduits 962a, 962b can extend from components such as a motor and/or a pump and merge into a main drain conduit 962 extending to the filter assembly 701. The main drain conduit 962 extends longitudinally outward from the filter support platform 964 and into the fourth endcap opening 838 (which is the third inlet of the filter assembly 701).

The drain pathway 702 is generally isolated from the filtration pathway 704 upstream of the primary media assembly 710, meaning that the drain pathway 702 and the filtration pathway 704 are distinct and fluidly separate flow paths. The drain pathway 702 is isolated from the filtration pathway 704 in the filter cover assembly 909. In particular, in this example the filter cover assembly 909 does not define a portion of the drain pathway 702. The drain pathway 702 extends from the drain tank inlet(s) 968 through the drain conduit 962 to the fourth endcap opening 838 defined by the fourth endcap 830 of the filter assembly 701, radially outward from the fourth endcap opening 838 through the flow gap 832 between the second endcap 730 and the fourth endcap 830, and radially outward through the secondary media assembly 810. As such, in examples consistent with the current example, the secondary filter element 800 is a drain filter element.

The drain pathway 702 circumvents the primary media assembly 710. The drain conduit 962 fluidly couples the drain pathway 702 to the drain filter element 800, which is the secondary filter element 800. The drain conduit 962 extends from the drain tank inlet 968 to the filter assembly 701 through the fluid cavity 961 of the tank 960. In the current example, the filtration pathway 704 inlet to the filter assembly 701 (which is the first endcap opening 721) is on the opposite longitudinal end of the filter assembly 701 from the drain pathway 702 inlet to the filter assembly 701 (which is the opening of the fourth endcap 830). Similarly, the fluid return inlet 913 is positioned towards a first end of the tank 960 and the drain tank inlet 968 is positioned towards a second, opposite end of the tank 960.

The specific configuration of the drain pathway 702 can have various advantages. For example, routing the drain conduit 962 (and, therefore, the drain pathway 702) to circumvent the filter assembly 701 can reduce the fluid pressure across the drain pathway 702, which lowers the fluid pressure on the motor casing (or other component housings upstream of the drain pathway 702). Furthermore, routing the drain conduit 962 to the bottom of the filter assembly 701 limits further aerating of the fluid in the fluid tank 960 compared to fluid towards the top of the filter assembly 701, where gravity would increase the impact between the drain fluid and any fluid in the fluid tank 960.

In some alternate embodiments, the drain pathway can extend into the filter cover assembly rather than through a bottom endcap of the filter assembly. In such embodiments the drain pathway can overlap with one or both of the fill port pathway and the bypass pathway in the filter cover assembly. In such an example, the drain pathway would similarly circumvent the primary media assembly and extend through the secondary media assembly. In such embodiments the fluid flow pathway 706 (see FIG. 11) would define a portion of the drain pathway.

The filtration pathway 704 extends from the fluid return conduit 912 to first endcap 720, and specifically a first inlet that is the first endcap opening 721 of the first endcap 720. The filtration pathway 704 extends from the fluid return conduit 912, through the filter cover assembly 909 and the first endcap 720, through the central passageway 716, and radially outward through the primary media assembly 710 and the secondary media assembly 810.

While in the current example, the filter cover assembly 909 has the filter cover 920 coupled to a filter head structure 910, in some embodiments the filter cover assembly has a filter cover without a filter head structure. In such embodiments, the filter cover can be installed directly into the fluid tank. Also, in some embodiments the filter head structure 910 can be a filter head that is a separate component from the tank 960. The filter cover assembly is generally configured to interface with the filter cartridge and direct the drain flow and the filtration flow to the relevant flow paths defined by the filter elements.

While the currently-depicted and currently-discussed example has a primary filter element 700 and a secondary filter element 800, in various implementation of the current technology can omit the secondary filter element 800. A secondary filter element could be omitted where, for example, a separate drain filter is incorporated in the filter element (such as described in accordance with FIG. 8).

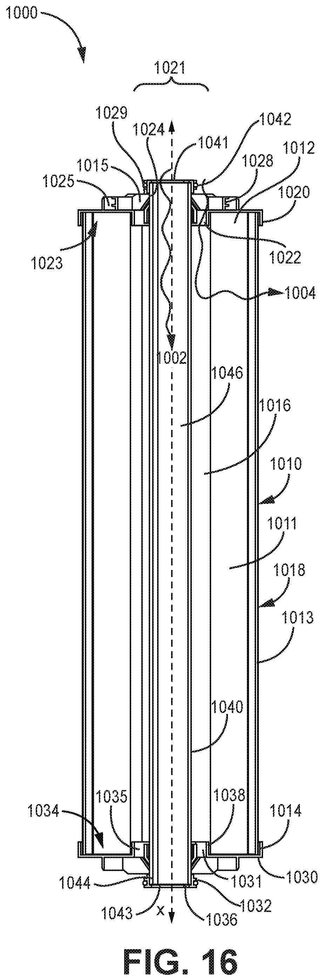

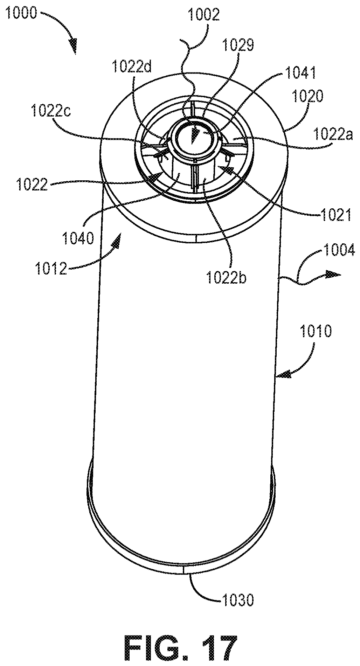

FIG. 16 is a cross-sectional view of another example filter element 1000 consistent with the technology disclosed herein. FIG. 17 is a perspective view of the example filter element 1000. The filter element 1000 has filter media assembly 1010 defining a central passageway 1016, a first endcap 1020 coupled to a first media end 1012 of the filter media assembly 1010, a second endcap 1030 coupled to a second media end 1014 of the filter media assembly 1010, and a flow tube 1040 disposed in the central passageway 1016.

The filter element 1000 defines a filtration pathway 1004 and a drain pathway 1002, where the filtration pathway 1004 extends through the filter media assembly 1010 and the drain pathway 1002 bypasses/circumvents (does not extend through) the filter media assembly 1010. The drain pathway 1002 is separated from the filtration pathway 1004 within the filter element 1000. The drain pathway 1002 is generally configured to be separate from the filtration pathway 1004 upstream of the primary media assembly 1010. The filtration pathway 1004 is configured to merge with the drain pathway 1002 downstream of the primary media assembly 1010. The various features and functionalities of the current example filter element 1000 are generally consistent with the filter elements discussed above, except where such features and functionalities are inconsistent with the current description or figure.

The filter media assembly 1010 is generally configured to filter a fluid. In some embodiments the filter media assembly 1010 is configured to filter hydraulic fluid. The first end 1012 of the filter media assembly 1010 is coupled to the first endcap 1020. The second end 1014 of the filter media assembly 1010 is coupled to a second endcap 1030. The filter media assembly 1010 generally has a cylindrical arrangement. The filter media assembly 1010 defines the central passageway 1016 extending from the first media end 1012 to the second media end 1014. The central passageway 1016 defines the filtration pathway 1004 and the drain pathway 1002. In the current example the drain pathway 1002 is an elongate cylinder. The filtration pathway 1004 forms a tubular structure surrounding the drain pathway 1002.

The filter media assembly 1010 and the central passageway 1016 share a central axis *x,* where the central axis *x* extends in a longitudinal direction. The filter media assembly 1010 can have lengths in the longitudinal direction as has been discussed previously. The filter media assembly 1010 has filter media 1011. The filter media 1011 can have constructions consistent with other examples discussed herein, such as being pleated. A structural support 1013 surrounds the filter media 1011. The structural support 1013 defines an outer radial boundary 1018 of the filter media assembly 1010. The structural support 1013 can have configurations and functionality as has been discussed above. A structural support can abut the filter media 1011 along its inner radial boundary about the central passageway 1016 in some embodiments.

The first endcap 1020 is generally configured to retain the first media end 1012 of the filter media assembly 1010 and define a portion of a filtration pathway 1004 through the filter media assembly 1010. The first endcap 1020 is configured to define a portion of the drain pathway 1002, such that the drain pathway 1002 extends through the first endcap 1020. The drain pathway 1002 is separated from the filtration pathway 1004 through the first endcap 1020. The first endcap 1020 defines a first endcap opening 1021 extending from outside the filter assembly 1001 to the central passageway 1016 in the longitudinal direction. In the current example, the first endcap opening 1021 is a combination of a plurality of openings that is a first tube receptacle 1024 and a first passageway opening 1022.

The first passageway opening 1022 is cumulatively formed by a series of discrete openings that are opening segments 1022a, 1022b, 1022c, 1022d, which is best visible in FIG. 17. A plurality of braces 1015 separate each of the discrete openings that cumulatively define the first passageway opening 1022. The plurality of discrete opening segments 1022a, 1022b, 1022c, 1022d are defined about the central axis x. The first passageway opening 1022 is defined between the flow tube 1040 and the filter media assembly 1010. The first passageway opening 1022 extends circumferentially around the first tube opening 1041. In some embodiments the first passageway opening 1022 defines a filtration pathway inlet to the filter element 1000, which will be described in more detail below.

As is best visible in FIG. 16, the first endcap 1020 has a first media potting structure 1023 that is configured to receive the first end 1012 of the filter media assembly 1010. The first media potting structure 1023 can be configured as discussed above with reference to FIGS. 1-2. In some embodiments the first endcap 1020 does not have a media potting structure.

The first endcap 1020 has an outer circumferential sealing surface 1028 about the longitudinal axis x that is configured to form a seal with filtration system components, which will be described in more detail, below. The outer circumferential sealing surface 1028 shares the central axis x of the filter media assembly 1010 and central passageway 1016. The outer circumferential sealing surface 1028 can be a circumferential cavity that is configured to receive an elastomeric component, such as an o-ring. In some embodiments the circumferential cavity is discontinuous, while in other embodiments the circumferential cavity is continuous. In some embodiments the first endcap 1020 can define an inner circumferential sealing surface 1025 that is configured to form a seal with filtration system components.

The second endcap 1030 is generally configured to retain the second media end 1014 of the filter media assembly 1010 and define a portion of the filtration pathway 1004 through the filter media assembly 1010. The second endcap 1030 is configured to define a portion of a drain pathway 1002 such that the drain pathway 1002 extends through the second endcap 1030. The drain pathway 1002 is separated from the filtration pathway 1004 through the second endcap 1030. In particular, the second endcap 1030 defines a second tube receptacle 1036 that is configured to receive the flow tube 1040. Contrary to some other embodiments, in this example the second endcap 1030 defines a second passageway opening 1031 fluidly coupling the environment outside of the filter element 1000 to the portion of the central passageway 1016 surrounding the flow tube 1040. The second passageway opening 1031 is defined between the flow tube 1040 and the filter media assembly 1010. Similar to the first endcap 1020, in this example the second endcap 130 has a plurality of braces 1035 extending between the second endcap 1030 and the flow tube 1040, which separate each of the discrete openings that cumulatively define the second passageway opening 1031.

In the current example, the second endcap 1030 has an inner tubular flange 1038 extending longitudinally into the central passageway 1016. The inner tubular flange 1038 surrounds the second passageway opening 1031. In some embodiments the second endcap 1030 does not have an inner tubular flange 1038. The second endcap 1030 has a second media potting structure 1034 that is configured to receive the second end 1014 of the filter media assembly 1010. The second media potting structure 1034 can be consistent with those described elsewhere herein. In some embodiments the second endcap 1030 can omit the second media potting structure 1034.

The flow tube 1040 is generally configured to define a portion of the drain pathway 1002. The flow tube 1040 contains the drain pathway 1002. The flow tube 1040 is generally configured to define a portion of a bypass pathway. The bypass pathway can merge with the drain pathway 1002. The flow tube 1040 can be configured to define a portion of a fill port pathway. The fill port pathway can merge with the drain pathway 1002. The flow tube 1040 is generally configured to separate the drain pathway 1002 and the filtration pathway 1004 through the filter element 1000. The flow tube 1040 has a first tube end 1042 and a second tube end 1044. The first tube end 1042 defines a first tube opening 1041. The second tube end 1044 defines a second tube opening 1043. The flow tube 1040 defines a central opening 1046 extending from the first tube end 1042 to the second tube end 1044. The first tube end 1042 can have a sealing structure that is configured to form a seal with system components.

The flow tube 1040 and its central opening 1046 extend in the longitudinal direction. The central opening 1046 forms an elongate cylinder in the current example, but in other examples the central opening can be tapered or form other shapes. In the current example, the flow tube 1040 is positioned in the central passageway 1016. Specifically, the flow tube 1040 is positioned centrally to the central passageway 1016.

In examples consistent with the current embodiment, the first tube end 1042 of the flow tube 1040 is coupled to a first tube connector 1029 of the first endcap 1020 about the drain pathway 1002. The first tube connector 1029 defines the first tube receptacle 1024 that receives the first tube end 1042 of the flow tube 1040. In some embodiments the first endcap 1020 does not have a first tube connector 1029. In some embodiments, the first tube connector is separate from and detached from the first endcap. In some other embodiments, the flow tube is a single unitary structure separate from the first endcap and is not directly coupled to the first endcap. In some further embodiments, the first endcap defines a segment of the flow tube, as discussed above in previous examples. In yet further embodiments, the first endcap and the flow tube are a single, unitary component.

The flow tube 1040 is coupled to the second endcap 1030 about the second tube receptacle 1036. In particular, the second endcap 1030 has a second tube connector 1032 defining the second tube receptacle 1036. The flow tube 1040 and the second tube connector 1032 of the second endcap 1030 mutually engage in the second tube receptacle 1036 to form a radial seal about the second tube receptacle 1036. While, in the current example, the second tube end 1044 of the flow tube 1040 frictionally and sealably receives the second tube connector 1032 of the second endcap 1030, in some embodiments the flow tube 1040 can form an integral, unitary structure with the second endcap 1030, such as where the flow tube 1040 and second endcap 1030 are formed through a single molding operation. In some embodiments the flow tube 1040 passes through an opening in the second endcap 1030 and is not directly coupled to the second endcap 1030.

The flow tube 1040 defines the first tube opening 1041. The first passageway opening 1022 is configured to be fluidly separated from the flow tube 1040. The first passageway opening 1022 is fluidly separated from the first tube opening 1041 by the flow tube 1040. The first tube opening 1041 is in direct fluid communication with the central opening 1046 of the flow tube 1040. The first passageway opening 1022 is in direct fluid communication with the central passageway 1016 of the filter media assembly 1010. The first passageway opening 1022 is positioned radially between the flow tube 1040 and the filter media assembly 1010.

The filter element 1000 defines the filtration pathway 1004 extending from the first passageway opening 1022 to the second passageway opening 1031 via the central passageway 1016. The filtration pathway 1004 extends through the first endcap 1020 and the second endcap 1030. The filter element 1000 defines the filtration pathway 1004 extending from the first passageway opening 1022 through the filter media assembly 1010. The filter element 1000 defines the filtration pathway 1004 extending from the second passageway opening 1031 through the filter media assembly 1010. The filter element 1000 also defines a drain pathway 1002 from the first tube opening 1041 to the second tube opening 1043.

The flow tube 1040 generally extends between the first endcap 1020 and the second endcap 1030. In this example, the flow tube 1040 extends through the first endcap 1020 and the second endcap 1030, but other configurations are possible.

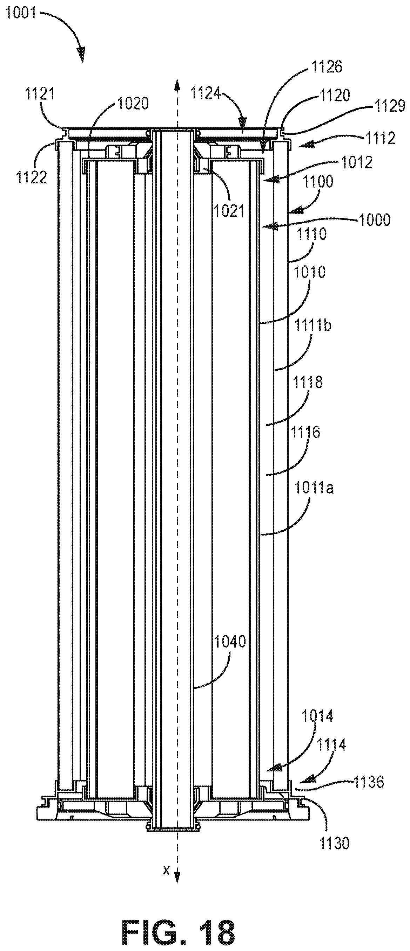

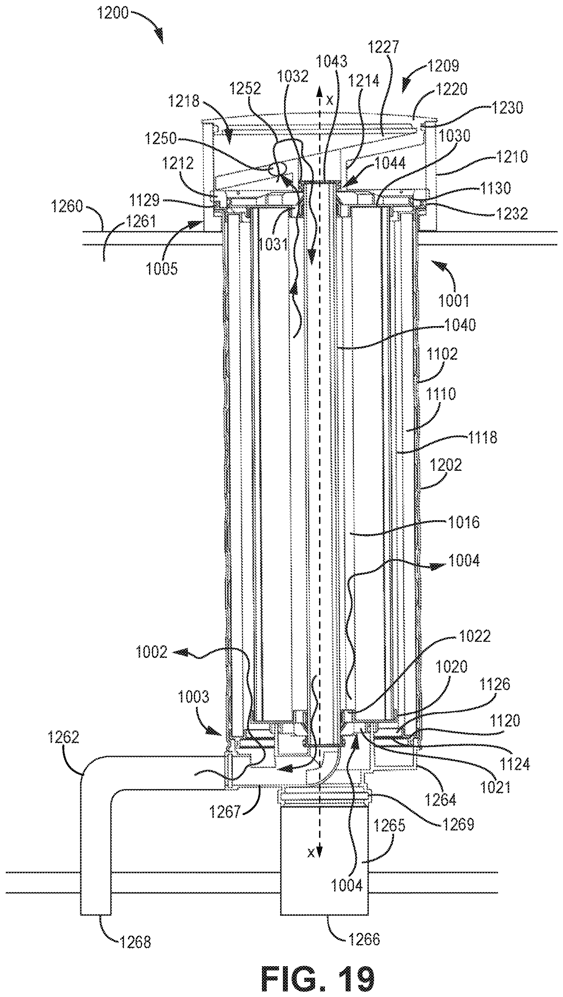

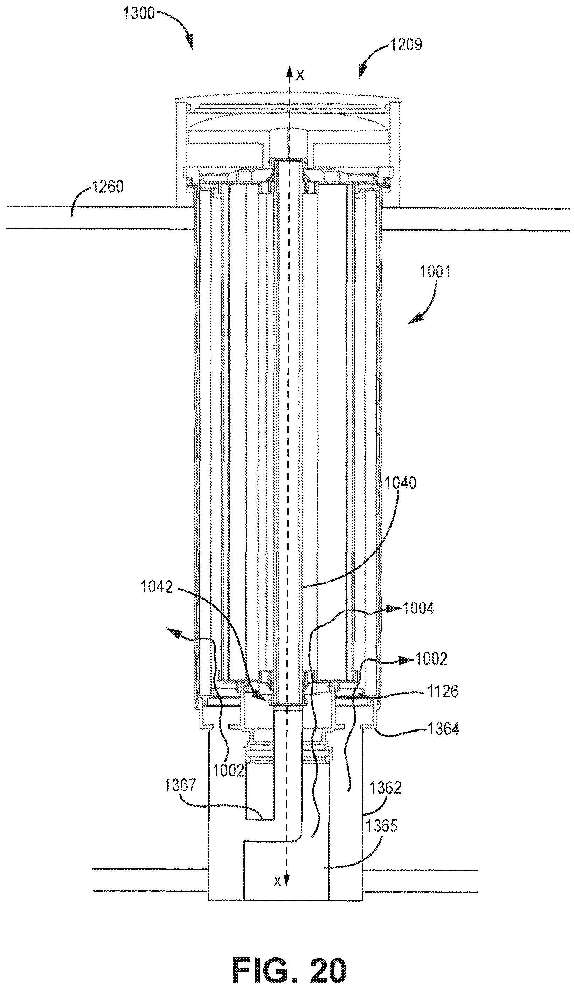

FIG. 18 is a cross-sectional view of an example filter assembly 1001 consistent with the technology disclosed herein. The filter assembly 1001 is generally configured to be installed in a fluid filtration system, which will be described in more detail below with respect to FIGS. 19 and 20. The filter assembly 1001 has a primary filter element 1000 and a secondary filter element 1100. Here the secondary filter element 1100 surrounds the primary filter element 1000. The primary filter element 1000 is consistent with the depictions of FIGS. 16 and 17 and the corresponding description.

The secondary filter element 1100 has a secondary media assembly 1110 having a third end 1112 and fourth end 1114. The third end 1112 is positioned towards the first end 1012 of the media assembly 1010 of the primary filter element 1000 (hereinafter the "primary media assembly") and the fourth end 1114 is positioned towards the second end 1014 of the primary media assembly 1010. The secondary media assembly 1110 defines a cavity 1116 extending from the third end 1112 to the fourth end 1114. The cavity 1116 receives the primary filter element 1000. An element gap 1118 can be defined between the outer circumferential limit 1011a of the filter media assembly 1010 and an inner circumferential limit 1111b defined by the secondary media assembly 1110. The element gap 1118 can be defined in the radial direction between the outer circumferential limit 101 1a of the filter media assembly 1010 and an inner circumferential limit 1111b defined by the secondary media assembly 1110.

In some embodiments, the secondary media assembly 1110 can be configured to facilitate deaeration of the liquid filtered by the primary filter element 1000. In some embodiments, the secondary media assembly 1110 is configured to filter bypass fluid. In various embodiments, the secondary media assembly 1110 has a higher permeability than the primary media assembly 1010. In various embodiments, the primary media assembly 1010 has a higher particle filtration efficiency than the secondary media assembly 1110. In some embodiments the secondary media assembly 1110 can have an particle filtration efficiency sufficient to meet minimum filtration requirements for bypass fluid. The secondary media assembly 1110 can be constructed of various different types of filter media and combinations of filter media that have been discussed above with respect to other secondary media assemblies described herein.

A third endcap 1120 is coupled to the third end 1112 of the secondary media assembly 1110 and is configured to couple to a filtration system. The third endcap 1120 has a radial rim 1121 on one longitudinal end and a radial potting structure 1122 on an opposite longitudinal end. The radial potting structure 1122 forms a receiving channel that is configured to receive the third end 1112 of the secondary media assembly 1110. The radial potting structure 1122 can be configured similarly to other radial potting structures discussed above.

The third endcap 1120 defines a third endcap opening 1124 (where the first endcap 1020 defines the first endcap opening 1021) that is configured to receive the primary filter element 1000. Unlike some previous examples, here the third endcap 1120 does not form a fluid seal with the first endcap 1020. An endcap gap 1126 is defined between the third endcap 1120 and the primary filter element 1000 which defines a fluid flow pathway to the element gap 1118 between the first media assembly 1010 and the secondary media assembly 1110. The endcap gap 1126 is positioned radially outward from the central passageway 1016. The third endcap 1120 defines an outer circumferential sealing surface 1129 that is configured to form a seal with system components, which is depicted in FIGS. 18 and 19 and will be described below. The outer circumferential sealing surface 1129 of the third endcap 1120 is similar to that described above with respect to the outer circumferential sealing surface 1028 of the first endcap 1020.

A fourth endcap 1130 is coupled to the fourth end 1114 of the secondary media assembly 1110. The fourth endcap 1130 has a media potting structure 1136 that is configured to receive the fourth end 1114 of the secondary media assembly 1110. The fourth endcap 1130 and the second endcap 1030 are configured to form a fluid barrier across the element gap 1118 between the first media assembly 1010 and the secondary media assembly 1110.

FIG. 19 is a schematic example system consistent with the assembly of FIG. 18. The system 1200 has a fluid tank 1260 with a filter assembly 1001 installed therein. The fluid tank 1260 generally defines a fluid cavity 1261 configured to receive a fluid and a filter assembly opening 1218 that is configured to receive a filter assembly 1001. The fluid tank 1260 defines a drain tank inlet 1268. The various features and functionalities of the current example system 1200 are generally consistent with the systems discussed above, except where such features and functionalities are inconsistent with the current description or figure.

The filter assembly 1001 is disposed in the fluid cavity 1261 and is coupled to the tank 1260 about the filter assembly opening 1218. A filter cover assembly 1209 is configured to receive the filter assembly 1001. The filter cover assembly 1209 has a filter head 1210 that is configured to couple to the filter assembly 1001. A removable filter cover 1220 is configured to detachably couple to the filter head 1210. The filter cover 1220 is coupled to the filter head 1210 via mating features which, in the current example, is a first circumferential sealing region 1230 that is configured to define frictional engagement between the filter head 1210 and the filter cover assembly 1209. The filter cover 1220 and the filter head 1210 can form a sealed connection about the filter assembly opening 1218.

The system 1200 has a filter support platform 1264 that is configured to support a portion of the filter assembly 1001. The filter support platform 1264 is configured to couple to the filter assembly 1001. The filter cover assembly 1209 and the filter support platform 1264 can exert a compression force on the filter assembly 1001 to secure the filter assembly 1001 in position.

The filter cover 1220 and the filter head 1210 define the first circumferential sealing region 1230. The filter head 1210 and the filter assembly 1001 define a second circumferential sealing region 1232. Each of the first circumferential sealing region 1230 and the second circumferential sealing region 1232 are configured to be disposed about the central axis x. The first circumferential sealing region 1230 is positioned towards a distal longitudinal end of the filter head 1210. The second circumferential sealing region 1232 positioned towards the opposite longitudinal end of the filter head 1210. In the current example, a retainer ring 1212 is disposed in the filter cover assembly 1209 and is configured to resist longitudinal translation of the filter assembly 1001 relative to the filter cover assembly 1209. The retainer ring 1212 can be configured to secure the fourth endcap 1130 in the filter head 1210.

In the current example, the filter cover assembly 1209 has a filter housing 1202 that is configured to receive a substantial portion of the filter assembly 1001. The filter housing 1202 extends from the filter head 1210 to the filter support platform 1264. The filter housing 1202 surrounds the secondary media assembly 1110. The filter housing 1202 is coupled to the filter head 1210 at a first longitudinal end and coupled to the filter support platform 1264 at a second longitudinal end that is opposite the first longitudinal end. The filter housing 1202 can be constructed of a variety of materials and combinations of materials including metal, plastic, mesh, and the like. In some embodiments the filter housing 1202 is configured to provide structural support to the secondary media assembly 1110.

It is noted that, in the current example system 1200, the first endcap 1020 of the primary filter element 1000 and the third endcap 1120 of the secondary filter element 1100 are coupled to the filter support platform 1264. The second endcap 1030 of the primary filter element 1000 and the fourth endcap 1130 of the secondary filter element 1100 are coupled to the filter head 1210. Thus, first endcap 1020 is positioned vertically below the second endcap 1030 in this example system 1200. The third endcap 1120 is positioned vertically below the fourth endcap 1130 in this example system 1200. The first endcap 1020 and the third endcap 1120 can define a first end 1003 of the filter assembly 1001. The second endcap 1030 and the fourth endcap 1130 can define a second end 1005 of the filter assembly 1001. In this example the first end 1003 of the filter assembly 1001 is positioned vertically below the second end 1005 of the filter assembly 1001. In some embodiments, however, such as has been described earlier herein, the second end of the filter assembly can be positioned vertically below the first end of the filter assembly.

The flow tube 1040 is configured to be sealably coupled to the filter cover assembly 1209. The filter cover 1220 has a first tube connector 1214 that is configured to sealably couple to the second tube end 1044. In this particular example, the first tube connector 1214 sealably receives the second tube connector 1032 of the second endcap 1030. The first tube connector 1214 is configured to separate the second passageway opening 1031 from the second tube opening 1043 within the filter head 1210. Other configurations are also contemplated to couple the filter cover assembly 1209 to the filter assembly 1001.

The fluid tank 1260 has a fluid return conduit 1265 that has a fluid return inlet 1266 to the system 1200. The filtration pathway 1004 extends from the fluid return inlet 1266 through the fluid return conduit 1265. The fluid return conduit 1265 and the filter support platform 1264 define portions of the filtration pathway 1004. In particular, the filter support platform 1264 defines a fluid return interface 1269 configured to fluidly couple the fluid return conduit 1265 to the filter assembly 1001 about the filtration pathway 1004. The fluid return conduit 1265 is coupled to the filter support platform 1264, where the filter support platform 1264 also defines a portion of the filtration pathway 1004. The filter support platform 1264 is coupled to the first endcap 1020 of the primary filter element 1000 about the first endcap opening 1021 such that the filtration pathway 1004 extends through the fluid return inlet 1266, the filter support platform 1264, the first endcap opening 1021, the first passageway opening 1022, and the central passageway 1016 of the primary filter element 1000.

Configurations consistent with the present example, where the inlet to the filtration pathway 1004 of the filter element is positioned towards the bottom of the filter assembly 1001 advantageously limits aeration of the fluid compared to configurations where the inlet to the filtration pathway is positioned towards a top of the filter assembly. In the latter configuration, the force of gravity on the fluid traveling from the top of the filter element to the bottom may cause aeration of the fluid upon impact between the fluid and the rest of the assembly.

The system 1200 also defines a portion of the drain pathway 1002. The drain pathway 1002 extends through the tank 1260 via one or more drain conduits 1262 through the third endcap opening 1124. The drain conduit 1262 extends from a drain tank inlet 1268 to the filter support platform 1264. The filter support platform 1264 fluidly couples the drain conduit 1262 and the third endcap opening 1124. In particular, the filter support platform 1264 defines a drain path interface 1267 that is configured to fluidly couple the drain conduit 1262 to the endcap gap 1126 between the third endcap 1120 and the primary filter element 1000. The filter support platform 1264 isolates the first passageway opening 1022 from the endcap gap 1126 between the third endcap 1120 and the primary filter element 1000. In this example, the endcap gap 1126 between the third endcap 1120 and the primary filter element 1000 defines a portion of the drain pathway within the filter assembly 1001. In this example, flow area defined by the third endcap opening 1124 outside of the flow tube 1040 defines a drain pathway inlet of the filter assembly 1001.

The drain pathway 1002 extends from the drain tank inlet 1268 through the drain conduit 1262, through the filter support platform 1264, to the element gap 1118 defined between the primary filter element 1000 and the secondary filter element 1100, and radially outward through the secondary media assembly 1110. As such, in examples consistent with the current example, the secondary filter element 1100 is a drain filter element.

The drain pathway 1002 circumvents the primary media assembly 1010. In particular, the drain pathway 1002 is separated from the filtration pathway 1004 upstream of the primary media assembly 1010. The drain conduit 1262 fluidly couples the drain pathway 1002 to the drain filter element 1100, which is the secondary filter element 1100. The drain conduit 1262 extends from the drain tank inlet 1268 to the filter assembly 1001 through the fluid cavity 1261 of the tank 1260. In the current example, the filtration pathway 1004 inlet to the filter assembly 1001 (which is the first passageway opening 1022) is towards the same longitudinal end of the filter assembly 1001 as the drain pathway 1002 inlet to the filter assembly 1001 (which is the endcap gap 1126 between the third endcap 1120 and the primary filter element 1000). Similarly, the fluid return inlet 1266 is positioned towards a first end of the tank 1260 and the drain tank inlet 1268 is positioned towards the same end of the tank 1260. The specific configuration of the drain pathway 1002 relative to the system 1200 can have various advantages as has been discussed above with reference to FIGS. 13-15.

The system 1200 is configured to selectively define a bypass pathway 1252 that bypasses the primary filter element 1000 and, in particular, the primary media assembly 1010. The bypass pathway 1252 selectively extends from a location upstream of the primary media assembly 1010 along the filtration pathway 1004 through the secondary media assembly 1110 to a filter assembly outlet where the filter assembly outlet is a downstream face 1102 of the secondary filter element 1100. The filtration system has a bypass valve 1250 disposed upstream of the primary media assembly 1010 between the filtration pathway 1004 and the drain pathway 1002 in the filter assembly 1001. In particular, the filter cover assembly 1209 has the bypass valve 1250. The bypass valve 1250 selectively directs fluid flow from the filtration pathway 1004 (upstream of the primary media assembly 1010) to the drain pathway 1002 in the event that the fluid pressure in the filtration pathway 1004 exceeds a threshold value. As such, bypass fluid flow passes through the bypass pathway 1252 into the drain pathway 1002 and is filtered by the secondary media assembly 1110. This can be an advantage compared to systems having no filter for bypass fluid flow. In some embodiments a bypass valve 1250 can be omitted.

In this example, the filter cover assembly 1209 defines a portion of the drain pathway 1002, a portion of the filtration pathway 1004 and the bypass pathway 1252. Under normal operating conditions, filter cover assembly 1209 is configured to isolate the drain pathway 1002 from the filtration pathway 1004. However, under a pressure spike in the filtration pathway 1004 that reaches a threshold, the bypass valve 1250 opens to define the bypass pathway 1252. The flow tube 1040 extends from the drain pathway defined by the filter support platform 1264 through the central passageway 1016 to the drain pathway defined by the filter cover assembly 1209. Thus, in this example, bypass fluid flow is routed downward to the first end 1003 of the filter assembly 1001 to merge with drain fluid flow. The second tube end 1044 of the flow tube 1040 defines a second inlet to the drain pathway 1002.

In the current system 1200, the filter cover assembly 1209 defines a fill port 1227 in fluid communication with the drain pathway 1002. The fill port 1227 can be in selective fluid communication with the bypass pathway 1252. In normal operation, the fill port 1227 is isolated from the filtration pathway 1004 within the filter cover assembly 1209. An advantage of configuring the fill port 1227 to be in fluid communication with drain pathway 1002 is that new fluid added to the system is filtered through the secondary media assembly 1110. In some embodiments the fill port 1227 can be omitted.

The filter cover 1220 is removably disposed on the filter head 1210 across the fill port 1227. The filter cover 1220 can be selectively removed by a user for adding fluid, such as hydraulic fluid, to the system 1200. In the current example, the removable cover 1220 and the filter cover assembly 1209 frictionally engage through a first circumferential sealing region 1230. Other coupling features can also be used to couple the filter cover 1220 to the filter head 1210 such as threading, bolts, magnets, and the like.

The filtration pathway 1004 extends from the fluid return conduit 1265 to first endcap 1020, and specifically a first inlet to the filter element that is the first passageway opening 1022 of the first endcap 1020 through the central passageway 1016, and radially outward through the primary media assembly 1010 and the secondary media assembly 1110. The filtration pathway 1004 also extends through the second endcap 1030 and into a portion of the filter cover assembly 1209 to the bypass valve 1250.

While not currently depicted, it is noted that the tank 1260 will generally have a fluid outlet that is configured to be in fluid communication with other system components, such as a fluid pump.

FIG. 20 depicts another example tank system 1300 consistent with an example filter assembly of FIG. 18. The system 1300 is generally consistent with the system described with reference to FIG. 19. However, in the current example, the drain conduit 1362 at least partially surrounds the fluid return conduit 1365 about the central axis x. As such, drain fluid is configured to enter the filter assembly 1001 around the endcap gap 1126 between the third endcap 1120 and the primary filter element 1000. A drain path interface 1367 fluidly couples the drain conduit 1362 and the flow tube 1040. The drain path interface 1367 extends radially inward from the drain conduit 1362. The drain path interface 1367 extends radially into the fluid return conduit 1365. The drain path interface 1367 can be partially defined by the filter support platform 1364. The drain path interface 1367 extends longitudinally to the first tube end 1042 of the flow tube 1040.

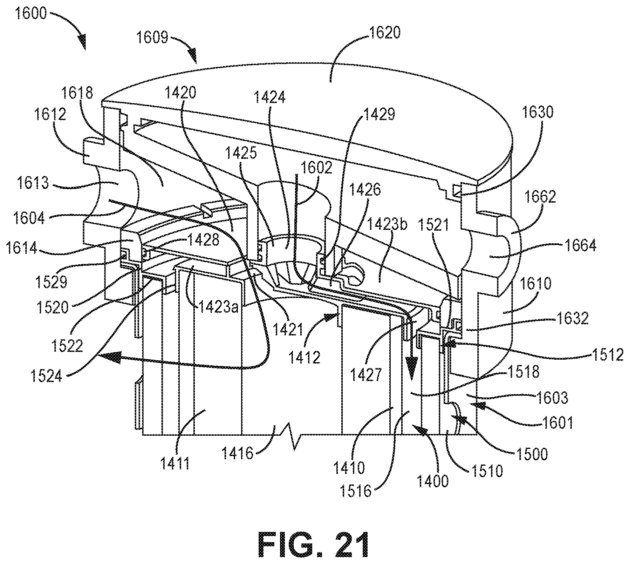

FIG. 21 is a partial cross-sectional perspective view of is a second cross-sectional view of the example system 1600. The system 1600 has a filter cover assembly 1609 and a filter assembly 1601 having a primary filter element 1400 and a secondary filter element 1500. The system 1600 defines a filtration pathway 1604 extending through a primary media assembly 1410 of the primary filter element 1400 and a secondary media assembly 1510 of the secondary filter element 1500. The system 1600 defines a drain pathway 1602 that is configured to circumvent the primary media assembly 1410 and extend through the secondary media assembly 1510. The drain pathway 1602 is separated from the filtration pathway 1604 in the primary filter element 1400.

The filter assembly 1601 is configured to be disposed in a fluid cavity of a tank. The filter cover assembly 1609 is generally configured to receive the filter assembly 1601. Similar to embodiments discussed above, the filter cover assembly 1609 can have a filter housing 1603 that is configured to receive a substantial portion of the filter assembly 1601. The filter cover assembly 1609 has the filter head 1610 that is configured to couple to the filter assembly 1601. The filter cover assembly 1609 also has a filter cover 1620 that is configured to detachably couple to the filter head 1610. The filter cover 1620 is coupled to the filter head 1610 via mating features that can be similar to mating features discussed elsewhere herein.

The example filter assembly 1601 can have a central axis that extends in the longitudinal direction, as has been described herein. The primary filter element 1400 has primary media assembly 1410 defining a central passageway 1416 and a first endcap 1420 coupled to a first media end 1412 of the primary media assembly 1410. While not currently visible, the primary filter element 1400 also generally has a second endcap coupled to a second media end of the primary media assembly 1410, similar to other examples described herein. The primary media assembly 1410 is generally configured to filter a fluid and can be consistent with the description of other media assemblies described above and, as such, has filter media 1411 and optional structural supports.

The first endcap 1420 is generally configured to retain the first media end 1412 of the primary media assembly 1410 such as via a media potting structure that can be consistent with descriptions above. The first endcap 1420 has a first circumferential sealing surface 1428 about the longitudinal axis x that is configured to form a seal with the filter cover assembly 1609. The first circumferential sealing surface 1428 shares the central axis x of the primary media assembly 1410 and central passageway 1416. The first circumferential sealing surface 1428 can be a circumferential cavity that is configured to receive an elastomeric component, such as an o-ring. The first circumferential sealing surface 1428 can be consistent with other similar sealing surfaces described herein.

The first endcap 1420 defines a portion of the filtration pathway 1604 through the primary media assembly 1410. In particular, the first endcap 1420 defines a first endcap opening 1421 extending from outside the filter assembly 1601 to the central passageway 1416 in the longitudinal direction. In the current embodiment, the drain pathway 1602 extends through the first endcap 1420. The drain pathway 1602 is separated from the filtration pathway 1604 in the first endcap 1420. In particular, the first endcap 1420 defines a drain channel 1426 that extends from the filter cover assembly 1609 to an element gap 1518 between the primary media assembly 1410 and the secondary media assembly 1510. In particular, the first endcap 1420 has a first media potting structure 1423a (which has been described in detail elsewhere herein) and an endcap plate 1423b that is longitudinally spaced from the first media potting structure 1423a to define the drain channel 1426 therebetween. The endcap plate 1423b forms a seal with the filter cover assembly 1609.

The first endcap 1420 defines a tubular extension 1424 about the drain channel 1426 that extends longitudinally outward from the first endcap 1420. In particular, the tubular extension 1424 extends longitudinally outward from the endcap plate 1423b. The tubular extension 1424 is configured to form a seal with the filter cover assembly 1609 about the drain pathway 1602 to isolate the drain pathway 1602 from the filtration pathway 1604 upstream of the primary media assembly 1410. A second circumferential sealing surface 1429 is defined about the outer radial surface of the tubular extension 1424, but in some embodiments the second circumferential sealing surface can be defined about an inner radial surface of the tubular extension.

Unlike some other embodiments herein, in this example the entire central passageway 1416 defines a portion of the filtration pathway 1604. Similarly, the entire first endcap opening 1421 defines a portion of the filtration pathway 1604. In the current example, the drain pathway 1602 does not extend through the primary media assembly 1410 and rather, circumvents the primary media assembly 1410 via the first endcap 1420. In the first endcap 1420, the drain pathway 1602 has a drain pathway inlet 1425 and a drain pathway outlet 1427. The drain pathway inlet 1425 is defined by the tubular extension 1424 and the drain pathway outlet 1427 of the first endcap 1420 is defined by a portion of the first endcap 1420 that is adjacent to the element gap 1518. Similar to embodiments discussed above, the drain pathway 1602 is separated from the filtration pathway 1604 within the primary media assembly 1410. But in this example, the drain pathway 1602 and the filtration pathway 1604 are separate because the drain pathway 1602 is outside of the primary media assembly 1410.

The second endcap is generally configured to retain the second media end of the filter media assembly and can have a second media potting structure as described herein. The second endcap is configured to obstruct the central passageway 1416 such that the filtration pathway extends through the filter media assembly.

The secondary filter element 1500 generally surrounds the primary filter element 1400. The secondary filter element 1500 has a secondary media assembly 1510 having a third end 1512 and fourth end that is not visible. The third end 1512 is positioned towards the first end 1412 of the primary media assembly 1410 and the fourth end is positioned towards the second end of the primary media assembly 1410. The secondary media assembly 1510 defines a cavity 1516 extending from the third end 1512 to the fourth end. The cavity 1516 receives the primary filter element 1400. The element gap 1518 can be defined between the primary media assembly 1410 and the secondary media assembly 1510, as has been described herein. The secondary media assembly 1510 is generally configured consistently with the descriptions of other secondary filter media assemblies discussed above.

A third endcap 1520 is coupled to the third end 1512 of the secondary media assembly 1510 and is configured to couple to a filtration system. The third endcap 1520 has a third potting structure 1522 on one longitudinal end of the third endcap 1520. The third potting structure 1522 can be consistent with others described herein. The third endcap 1520 has a radial rim 1521 on an opposite longitudinal end of the third endcap 1520 relative to the third potting structure 1522. that has been discussed in previous examples. The radial rim extends radially outward from the third endcap 1520 and is configured to be secured by the cover assembly 1609. In particular, a retainer ring 1614 is configured to secure the third endcap 1520 in the filter cover assembly 1609.

The third endcap 1520 defines a third endcap opening 1524 that is configured to receive the primary filter element 1400. In this embodiment, the third endcap 1520 forms a fluid seal with an outer circumferential sealing surface of the first endcap 1420. In particular, each of the third endcap 1520 and the first endcap 1420 forms a seal with the retainer ring 1614 about the central axis, which forms a seal between the first endcap 1420 and the third endcap 1520.

A fourth endcap is coupled to the fourth end of the secondary media assembly 1510, similar to previous embodiments that have been described herein. The fourth endcap is configured to receive the fourth end of the secondary media assembly 1510, consistently with previously-described embodiments. In the current example, the fourth endcap is configured to form a fluid barrier across the cavity 1516. Each of the drain pathway 1602 and the filtration pathway 1604 extend radially outward through the secondary media assembly 1510. As such, the secondary media assembly 1510 serves as a drain filter.

The current depiction does not reflect a bypass valve. However, in some alternate examples, a bypass valve can be disposed in the filter cover assembly 1609 between the filtration pathway 1604 and the drain pathway 1602. The bypass valve can define a bypass pathway that selectively extends from the filtration pathway 1604 to the drain pathway 1602 to bypass the primary media assembly 1410. The bypass pathway selectively extends from the filtration pathway 1604 through the secondary media assembly 1510 to a filter assembly outlet, where the filter assembly outlet is the downstream face of the secondary filter element 1500. In some embodiments the filter cover 1620 is removable and defines a fill port. In some such embodiments, the fill port extends to the drain pathway 1602 and is isolated from the filtration pathway upstream of the primary media assembly 1410, such as within the filter cover assembly 1609.

The filter cover 1620 and the filter head 1610 are configured to form at least one seal about a filter assembly opening 1618 defined by the filter head 1610. The filter cover 1620 and the filter head 1610 define a first circumferential sealing region 1630 and a second circumferential sealing region 1632. The first circumferential sealing region 1630 is defined between the filter head 1610 and the filter cover 1620 about the central axis x towards a first longitudinal end of the filter head 1610. The second circumferential sealing region 1632 is defined between the filter head 1610 and the filter assembly 1601 towards the opposite longitudinal end of the filter head 1610 relative to the first circumferential sealing region 1630.

In the current example, a retainer ring 1614 is disposed in the filter cover assembly 1609 and is configured to resist longitudinal translation of portions of the filter assembly 1601 relative to the filter cover assembly 1609. The retainer ring 1614 can be configured to secure portions of the filter assembly 1601 in the filter head 1610. More particularly, in this example, the retainer ring 1614 is configured to secure the secondary filter element 1500 and the filter housing 1603 relative to the filter cover assembly 1609.

The filter cover assembly 1609 is configured to be removably coupled to a tank. In the current example, the filter cover assembly 1609 is configured to be removably coupled to the filter assembly 1601. The outer circumferential sealing surface 1529 about the third endcap 1520 forms a seal with a corresponding structure of the filter cover assembly 1609 and, more specifically, the filter head 1610. The corresponding structure of the filter head 1610 is an inner radial sealing surface, in the current example. In some alternate embodiments the third endcap can define an inner circumferential sealing surface and the corresponding structure of the filter head structure can be an outer circumferential sealing surface.

The filter cover 1620 and the filter head 1610 defines a portion of the filtration pathway 1604 between the first circumferential sealing region 1630 and the second circumferential sealing region 1632. The filter cover assembly 1609 defines a fluid return conduit 1612 that defines a fluid return inlet 1613 to the filtration pathway 1604 of the system 1600. In this particular embodiment, the filter head 1610 defines the fluid return conduit 1612, but in some other embodiments the filter cover 1620 can define the fluid return conduit 1612. In various embodiments, the filtration pathway 1604 is configured to receive hydraulic fluid that is returned to the fluid tank from an implement in the hydraulic system.

The filter cover assembly 1609 has a drain conduit 1662 defining a drain tank inlet 1664 to the tank system 1600. The drain tank inlet 1664 is in fluid communication with the drain pathway inlet 1425 of the filter assembly 1601.

The drain pathway 1602 is generally separated from the filtration pathway 1604 upstream of the primary media assembly 1410. The drain pathway 1602 is separated from the filtration pathway 1604 in the filter cover assembly 1609. The drain pathway 1602 extends from the drain tank inlet(s) 1664 through the drain conduit 1662 to the tubular extension 1424 into the drain channel 1426 defined by the first endcap 1420, radially outward from the tubular extension 1424 to the element gap 1518 between the primary media assembly 1410 and the secondary media assembly 1510, and radially outward through the secondary media assembly 1510. As such, in examples consistent with the current example, the secondary filter element 1500 is a drain filter element.

The drain pathway 1602 circumvents the primary media assembly 1410. The drain conduit 1662 fluidly couples the drain pathway 1602 to the drain filter element, which is the secondary filter element 1500. In the current example, the filtration inlet to the filter assembly 1601 (which is the first endcap opening 1421) is on the same longitudinal end of the filter assembly 1601 as the drain pathway inlet 1425 to the filter assembly 1601.

The specific configuration of the drain pathway 1602 can have various advantages. For example, routing the drain conduit 1662 (and, therefore, the drain pathway 1602) to circumvent the filter assembly 1601 can reduce the fluid pressure across the drain pathway 1602, which lowers the fluid pressure on the motor casing (or other component housings upstream of the drain pathway 1602

The filtration pathway 1604 extends from the fluid return conduit 1612 to the first endcap 1420, and specifically an element inlet that is the first endcap opening 1421 of the first endcap 1420. As such, the filtration pathway 1604 extends from the fluid return conduit 1612, through the filter cover assembly 1609 and the first endcap 1420, through the central passageway 1416, and radially outward through the primary media assembly 1410 and the secondary media assembly 1510.

While the currently-depicted and currently-discussed example has a primary filter element 1400 and a secondary filter element 1500, in various implementation of the current technology can omit the secondary filter element 1500. A secondary filter element could be omitted where, for example, a separate drain filter is incorporated in the filter element.

### Exemplary Embodiments

Embodiment 1. A filter element comprising: a filter media assembly having a first media end and a second media end and having a central passageway from the first media end to the second media end; a first endcap coupled to the first media end; a second endcap coupled to the second media end; a drain pathway extending through the first endcap, and a filtration pathway extending from the central passageway through the filter media assembly, wherein the drain pathway is isolated from the filtration pathway in the first endcap.

Embodiment 2. The filter element of any one of embodiments 1 and 3-17, wherein the drain pathway extends through the central passageway and the second endcap.

Embodiment 3. The filter element of any one of embodiments 1-2 and 4-17, wherein the drain pathway has a drain pathway inlet extending through the first endcap and a drain pathway outlet extending through the first endcap.

Embodiment 4. The filter element of any one of embodiments 1-3 and 5-17, wherein the filtration pathway further extends through the first endcap.

Embodiment 5. The filter element of any one of embodiments 1-4 and 6-17, further comprising a flow tube disposed in the central passageway, wherein the flow tube contains the drain pathway.

Embodiment 6. The filter element of any one of embodiments 1-5 and 7-17, wherein the flow tube is coupled to the first endcap about the drain pathway.

Embodiment 7. The filter element of any one of embodiments 1-6 and 8-17, wherein the flow tube is coupled to the second endcap about the drain pathway.

Embodiment 8. The filter element of any one of embodiments 1-7 and 9-17, wherein the flow tube is detached from the first endcap.

Embodiment 9. The filter element of any one of embodiments 1-8 and 10-17, wherein the drain pathway has a drain pathway inlet extending through the first endcap and a drain pathway outlet extending through the second endcap.

Embodiment 10. The filter element of any one of embodiments 1-9 and 11-17, further comprising a drain media assembly defining a portion of the drain pathway, wherein the drain media assembly is a drain pathway outlet.

Embodiment 11. The filter element of any one of embodiments 1-10 and 12-17, wherein the drain pathway outlet extends radially outward from the filter element.

Embodiment 12. The filter element of any one of embodiments 1-11 and 13-17, wherein the flow tube defines a drain pathway outlet.

Embodiment 13. The filter element of any one of embodiments 1-12 and 14-17, wherein the filtration pathway inlet is positioned radially between the flow tube and the filter media assembly.

Embodiment 14. The filter element of any one of embodiments 1-13 and 15-17, wherein the second endcap obstructs the filtration pathway in the central passageway.

Embodiment 15. The filter element of any one of embodiments 1-14 and 16-17, wherein the first endcap is configured to be positioned vertically above the second endcap.

Embodiment 16. The filter element of any one of embodiments 1-15 and 17, wherein the first endcap is configured to be positioned vertically below the second endcap.

Embodiment 17. The filter element of any one of embodiments 1-16, wherein the filtration pathway extends through the first endcap and the second endcap.

Embodiment 18. A filter element comprising: filter media assembly having a first media end and a second media end and having a central passageway from the first media end to the second media end; a first endcap coupled to the first media end, wherein the first endcap defines a first endcap opening; a second endcap coupled to the second media end, the second endcap defining a second endcap opening; and a flow tube having a first tube end and a second tube end, the flow tube defining a first tube opening on the first tube end and a central opening extending from the first tube end to the second tube end, wherein the flow tube is positioned in the central passageway and the flow tube extends between the first endcap opening and the second endcap opening, wherein the flow tube and the filter media assembly define a first passageway opening separated from the central opening, whereby the filter element has: a filtration pathway from the first passageway opening through the filter media assembly via the central passageway, wherein the first passageway opening defines an inlet to the filtration pathway, and a drain pathway along the central opening of the flow tube.

Embodiment 19. The filter element of any one of embodiments 18 and 20-26, wherein the flow tube and the second endcap form a seal about the central opening, and wherein the flow tube and the first endcap are detached.

Embodiment 20. The filter element of any one of embodiments 18-19 and 21-26, wherein the flow tube extends in a longitudinal direction from the second endcap beyond the first endcap.

Embodiment 21. The filter element of any one of embodiments 18-20 and 22-26, wherein the flow tube forms a seal with the first endcap about the central opening and the flow tube forms a seal with the second endcap about the central opening.

Embodiment 22. The filter element of any one of embodiments 18-21 and 23-26, wherein the first passageway opening has an outer diameter that is larger than an outer diameter of the first tube opening.

Embodiment 23. The filter element of any one of embodiments 18-22 and 24-26, further comprising a drain filter element having a drain filter inlet, wherein the flow tube is coupled to the drain filter element about the drain filter inlet.

Embodiment 24. The filter element of any one of embodiments 18-23 and 25-26, wherein the drain filter element is coupled to the second endcap.

Embodiment 25. The filter element of any one of embodiments 18-24 and 26, wherein the first passageway opening extends circumferentially around the first tube opening.

Embodiment 26. The filter element of any one of embodiments 18-25, wherein the first passageway opening is a series of opening segments.

Embodiment 27. A filter assembly comprising: a primary filter element comprising: primary media assembly having a first media end and a second media end and having a central passageway from the first media end to the second media end; a first endcap coupled to the first media end; a second endcap coupled to the second media end; and a filtration pathway extending through the first endcap, the central passageway, and the primary media assembly, wherein the filtration pathway has a filtration pathway inlet through the first endcap and an outlet through the primary media assembly; and a secondary filter element comprising: a secondary media assembly having a third media end and fourth media end and having a cavity extending from the third media end to the fourth media end, a third endcap coupled to the third media end of the secondary media assembly, wherein the third endcap has a third endcap opening, wherein the cavity and the third endcap opening are configured to receive the primary filter element, and a fourth endcap coupled to the fourth end of the secondary media assembly, wherein the filter assembly defines a drain pathway extending through the secondary filter element, wherein the drain pathway is separated from the filtration pathway within the primary media assembly.

Embodiment 28. The filter assembly of any one of embodiments 27 and 29-45, wherein the drain pathway extends through the first endcap, the second endcap and the central passageway.

Embodiment 29. The filter assembly of any one of embodiments 27-28 and 30-45, wherein the third endcap has an inner circumferential sealing surface that is configured to form a seal to an outer circumferential sealing surface of the first endcap.

Embodiment 30. The filter assembly of any one of embodiments 27-29 and 31-45, wherein the assembly defines a gap between the first endcap and the third endcap.

Embodiment 31. The filter assembly of any one of embodiments 27-30 and 32-45, wherein the gap between the first endcap and the third endcap defines a drain pathway inlet.

Embodiment 32. The filter assembly of any one of embodiments 27-31 and 33-45, further comprising a flow tube disposed in the central passageway, wherein the flow tube contains the drain pathway.

Embodiment 33. The filter assembly of any one of embodiments 27-32 and 34-45, wherein the filtration pathway inlet is defined between the first endcap and the flow tube.

Embodiment 34. The filter assembly of any one of embodiments 27-33 and 35-45, wherein the flow tube is coupled to the first endcap.

Embodiment 35. The filter assembly of any one of embodiments 27-34 and 36-45, wherein the fourth endcap forms a fluid barrier across the cavity.

Embodiment 36. The filter assembly of any one of embodiments 27-35 and 37-45, wherein the filtration pathway extends through the second endcap.

Embodiment 37. The filter assembly of any one of embodiments 27-36 and 38-45, further comprising spacers extending in a longitudinal direction between the fourth endcap and second endcap.

Embodiment 38. The filter assembly of any one of embodiments 27-37 and 39-45, wherein the fourth endcap and the second endcap define a flow gap that is a portion of the drain pathway from the second endcap to the secondary media assembly.

Embodiment 39. The filter assembly of any one of embodiments 27-38 and 40-45, further comprising a drain filter element having a drain filter inlet, wherein the drain filter element is along the drain pathway and the drain filter element is an outlet of the drain pathway.

Embodiment 40. The filter assembly of any one of embodiments 27-39 and 41-45, wherein the drain filter is coupled to the second endcap and the fourth endcap.

Embodiment 41. The filter assembly of any one of embodiments 27-40 and 42-45, wherein the drain filter element comprises a drain media assembly in fluid communication with the drain filter inlet, and wherein the primary media assembly has a higher particle filtration efficiency than the drain media assembly.

Embodiment 42. The filter assembly of any one of embodiments 27-41 and 43-45, wherein the primary media assembly has a higher particle filtration efficiency than the secondary media assembly.

Embodiment 43. The filter assembly of any one of embodiments 27-42 and 44-45, wherein the drain pathway has a drain pathway inlet defined by the first endcap.

Embodiment 44. The filter assembly of any one of embodiments 27-43 and 45, wherein the drain pathway has a drain pathway inlet defined by the flow tube.

Embodiment 45. The filter assembly of any one of embodiments 27-44, wherein the filtration pathway inlet extends circumferentially around the drain pathway inlet.

Embodiment 46. A system comprising: a filter cover assembly having a filtration pathway; a primary filter element configured to be removably coupled to the filter cover assembly, the primary filter element comprising a first endcap, a second endcap, and primary media assembly extending from the first endcap to the second endcap, wherein the primary filter element has a first central passageway in fluid communication with the filtration pathway; a drain filter element coupled to the filter cover assembly; and a drain pathway configured to extend to the drain filter element and circumvent the primary media assembly.

Embodiment 47. The system of any one of embodiments 46 and 48-62, wherein the filter cover assembly defines a portion of the drain pathway isolated from the filtration pathway.

Embodiment 48. The system of any one of embodiments 46-47 and 49-62, wherein the drain pathway is configured to circumvent the primary media assembly through the first central passageway.

Embodiment 49. The system of any one of embodiments 46-48 and 50-62, further comprising a secondary filter element having a third endcap, a fourth endcap, and secondary media assembly extending from the third endcap to the fourth endcap, wherein the secondary filter element has a second central passageway extending from the third endcap through the secondary media assembly, wherein the second central passageway is configured to receive the primary filter element.

Embodiment 50. The system of any one of embodiments 46-49 and 51-62, wherein the drain pathway extends to a gap defined between the primary media assembly and the secondary media assembly.

Embodiment 51. The system of any one of embodiments 46-50 and 52-62, wherein the third endcap is configured to form a seal with the first endcap.

Embodiment 52. The system of any one of embodiments 46-51 and 53-62, wherein the drain filter element is the secondary filter element.

Embodiment 53. The system of any one of embodiments 46-52 and 54-62, further comprising a flow tube extending through the first central passageway.

Embodiment 54. The system of any one of embodiments 46-53 and 55-62, wherein the drain pathway extends through the third endcap.

Embodiment 55. The system of any one of embodiments 46-54 and 56-62, wherein the drain pathway extends through the fourth endcap.

Embodiment 56. The system of any one of embodiments 46-55 and 57-62, wherein the flow tube is coupled to the filter cover assembly about the drain pathway.

Embodiment 57. The system of any one of embodiments 46-56 and 58-62, wherein the flow tube is coupled to the filter cover assembly about the bypass pathway.

Embodiment 58. The system of any one of embodiments 46-57 and 59-62, wherein the drain filter element is coupled to the second endcap.

Embodiment 59. The system of any one of embodiments 46-58 and 60-62, wherein the filter cover assembly further has a fill port in fluid communication with the drain pathway, and a removable cover disposed on the fill port.

Embodiment 60. The system of any one of embodiments 46-59 and 61-62, further comprising a bypass valve disposed between the drain pathway and the filtration pathway.

Embodiment 61. The system of any one of embodiments 46-60 and 62, wherein the filter cover assembly comprises a filter cover and a filter head, wherein the filter cover and the filter head are coupled.

Embodiment 62. The system of any one of embodiments 46-61, wherein the filter cover assembly comprises a filter cover and a filter head structure, wherein the filter head structure is defined by a tank and the filter cover is coupled to the filter head structure.

Embodiment 63. A hydraulic system comprising: a primary media assembly; a secondary media assembly in fluid communication with the primary media assembly; a filter assembly outlet downstream of the secondary media assembly; a filtration pathway extending through the primary media assembly, the secondary media assembly, and the filter assembly outlet; and a drain pathway extending through the secondary media assembly and the filter assembly outlet, wherein the drain pathway circumvents the primary media assembly.

Embodiment 64. The hydraulic system of any one of embodiments 63 and 65-75, further comprising a bypass pathway selectively extending from the filtration pathway through the secondary media assembly and the filter assembly outlet, wherein the bypass pathway bypasses the primary media assembly.

Embodiment 65. The hydraulic system of any one of embodiments 63-64 and 66-75, wherein the secondary media assembly is positioned downstream of the primary media assembly in the filtration pathway.

Embodiment 66. The hydraulic system of any one of embodiments 63-65 and 67-75, further comprising a primary filter element comprising: the primary media assembly having a first media end, a second media end and a central passageway from the first media end to the second media end; a first endcap coupled to the first media end; and a second endcap coupled to the second media end.

Embodiment 67. The hydraulic system of any one of embodiments 63-66 and 68-75, wherein the drain pathway extends through the first endcap and the second endcap of the primary filter element.

Embodiment 68. The hydraulic system of any one of embodiments 63-67 and 69-75, further comprising a secondary filter element comprising: the secondary media assembly having a third media end and fourth media end and having a cavity extending from the third media end to the fourth media end; a third endcap coupled to the third media end of the secondary media assembly, wherein the third endcap has a third endcap opening, wherein the cavity and the third endcap opening are configured to receive the primary filter element; and a fourth endcap coupled to the fourth end of the secondary media assembly.

Embodiment 69. The hydraulic system of any one of embodiments 63-68 and 70-75, wherein the drain pathway extends through the fourth endcap of the secondary filter element.

Embodiment 70. The hydraulic system of any one of embodiments 63-69 and 71-75, wherein the drain pathway does not extend through the primary media assembly.

Embodiment 71. The hydraulic system of any one of embodiments 63-70 and 72-75, wherein the third endcap has an inner circumferential sealing surface that is configured to form a seal to an outer circumferential sealing surface of the first endcap.

Embodiment 72. The hydraulic system of any one of embodiments 63-71 and 73-75, wherein the third endcap and the first endcap define the drain pathway therebetween.

Embodiment 73. The hydraulic system of any one of embodiments 63-72 and 74-75, further comprising a fill port pathway extending through the secondary media assembly and the filter assembly outlet, wherein the fill port pathway circumvents the primary media assembly.

Embodiment 74. The hydraulic system of any one of embodiments 63-73 and 75, wherein the fill port pathway and the bypass pathway merge into a fluid flow pathway.

Embodiment 75. The hydraulic system of any one of embodiments 63-74, wherein the fill port pathway and the bypass pathway merge with the drain pathway.

Embodiment 76. A tank system comprising: a tank defining a fluid cavity, a fluid outlet, a filter assembly opening, a fluid return inlet, and a drain tank inlet; a filter assembly disposed in the fluid cavity and coupled to the tank about the filter assembly opening; a filter cover assembly coupled to the filter assembly and the tank; a filtration pathway extending through the tank from the fluid return inlet to the filter assembly; and a drain conduit extending from the drain tank inlet to the filter assembly through the fluid cavity, wherein a drain pathway is defined from the drain tank inlet through the drain conduit to the filter assembly.

Embodiment 77. The tank system of any one of embodiments 76 and 78-85, wherein the filter cover assembly is positioned towards a first end of the tank and the drain tank inlet is defined towards an opposite end of the tank.

Embodiment 78. The tank system of any one of embodiments 76-77 and 79-85, wherein the tank defines a top end and a bottom end and the drain tank inlet is defined towards the bottom end of the tank.

Embodiment 79. The tank system of any one of embodiments 76-78 and 80-85, wherein the filter cover assembly defines the fluid return inlet.

Embodiment 80. The tank system of any one of embodiments 76-79 and 81-85, wherein the tank has a top end and a bottom end, and the tank defines the fluid return inlet towards the bottom end.

Embodiment 81. The tank system of any one of embodiments 76-80 and 82-85, wherein the filter assembly comprises a primary media assembly and a secondary media assembly downstream of the primary media assembly.

Embodiment 82. The tank system of any one of embodiments 76-81 and 83-85, wherein the filtration pathway extends from the fluid return inlet through the primary media assembly and through the secondary media assembly.

Embodiment 83. The tank system of any one of embodiments 76-82 and 84-85, wherein the drain pathway circumvents the primary media assembly and extends through the secondary media assembly.

Embodiment 84. The tank system of any one of embodiments 76-83 and 85, wherein the filter cover assembly comprises a filter cover and a filter head, wherein the filter cover and the filter head are coupled.

Embodiment 85. The tank system of any one of embodiments 76-84, wherein the filter cover assembly comprises a filter cover and a filter head structure, wherein the filter head structure is defined by the tank and the filter cover is coupled to the filter head structure.

Embodiment 86. A filter assembly comprising: a primary media assembly; a secondary media assembly in fluid communication with the primary media assembly; a filtration pathway outlet downstream of the secondary media assembly; a filtration pathway extending through the primary media assembly, the secondary media assembly, and the filtration pathway outlet; a drain pathway outlet configured to merge with the filtration pathway outlet; a drain pathway extending to the drain pathway outlet; a drain media assembly disposed across the drain pathway; and a fluid flow pathway selectively extending to the drain pathway upstream of the drain media assembly.

Embodiment 87. The filter assembly of any one of embodiments 86 and 88-74, wherein the fluid flow pathway is a bypass pathway that selectively extends from the fluid flow pathway to the drain pathway, where the bypass pathway is upstream of the primary media assembly.

Embodiment 88. The filter assembly of any one of embodiments 86-87 and 89-94, wherein the fluid flow pathway is a fill port pathway that is selectively openable by a user.

Embodiment 89. The filter assembly of any one of embodiments 86-88 and 90-94, wherein the secondary media assembly is positioned downstream of the primary media assembly in the filtration pathway.

Embodiment 90. The filter assembly of any one of embodiments 86-89 and 91-94, further comprising a primary filter element comprising: the primary media assembly having a first media end, a second media end and a central passageway from the first media end to the second media end; a first endcap coupled to the first media end; and a second endcap coupled to the second media end.

Embodiment 91. The filter assembly of any one of embodiments 86-90 and 92-94, further comprising a secondary filter element comprising: the secondary media assembly having a third media end and fourth media end and having a cavity extending from the third media end to the fourth media end; a third endcap coupled to the third media end of the secondary media assembly, wherein the third endcap has a third endcap opening, wherein the cavity and the third endcap opening are configured to receive the primary filter element; and a fourth endcap coupled to the fourth end of the secondary media assembly.

Embodiment 92. The filter assembly of any one of embodiments 86-91 and 93-94, wherein the third endcap has an inner circumferential sealing surface that is configured to form a seal to an outer circumferential sealing surface of the first endcap.

Embodiment 93. The filter assembly of any one of embodiments 86-92 and 94, further comprising a bypass pathway selectively extending to the secondary media assembly and bypassing the primary media assembly.

Embodiment 94. The filter assembly of any one of embodiments 86-93, further comprising a fill port pathway extending through the secondary media assembly and the filter assembly outlet, wherein the fill port pathway circumvents the primary media assembly.

It should also be noted that, as used in this specification and the appended claims, the phrase "configured" describes a system, apparatus, or other structure that is constructed to perform a particular task or adopt a particular structure. The word "configured" can be used interchangeably with similar words such as "arranged", "constructed", "manufactured", and the like.

All publications and patent applications in this specification are indicative of the level of ordinary skill in the art to which this technology pertains. All publications and patent applications are herein incorporated by reference to the same extent as if each individual publication or patent application was specifically and individually indicated by reference. In the event that any inconsistency exists between the disclosure of the present application and the disclosure(s) of any document incorporated herein by reference, the disclosure of the present application shall govern.

This application is intended to cover adaptations or variations of the present subject matter. It is to be understood that the above description is intended to be illustrative, and not restrictive, and the claims are not limited to the illustrative embodiments as set forth herein.

## Claims

1. A hydraulic system comprising:
a primary media assembly (710);
a secondary media assembly (810) in fluid communication with the primary media assembly (710);
a filter assembly outlet downstream of the secondary media assembly (810);
a filtration pathway (704) extending through the primary media assembly (710), the secondary media assembly (810), and the filter assembly outlet; and
a drain pathway (702) extending through the secondary media assembly (810) and the filter assembly outlet, wherein the drain pathway (702) circumvents the primary media assembly (710).

2. The hydraulic system of claim 1, further comprising a bypass pathway (952) selectively extending from the filtration pathway (704) through the secondary media assembly (810) and the filter assembly outlet, wherein the bypass pathway (952) bypasses the primary media assembly (710).

3. The hydraulic system of any one of claims 1 and 2, wherein the secondary media assembly (810) is positioned downstream of the primary media assembly (710) in the filtration pathway (704).

4. The hydraulic system of any one of claims 1-3, further comprising a primary filter element (700) comprising:
the primary media assembly (710) having a first media end (712), a second media end (714) and a central passageway (716) from the first media end (712) to the second media end (714);
a first endcap (720) coupled to the first media end (712); and
a second endcap (730) coupled to the second media end (714).

5. The hydraulic system of any one of claims 1-4, further comprising a secondary filter element (800) comprising:
the secondary media assembly (810) having a third media end (812) and fourth media end (814) and having a cavity (816) extending from the third media end to the fourth media end; a third endcap (820) coupled to the third media end (812) of the secondary media assembly (810), wherein the third endcap (820) has a third endcap opening (824), wherein the cavity (816) and the third endcap opening (824) are configured to receive the primary filter element (700); and
a fourth endcap (830) coupled to the fourth end (814) of the secondary media assembly (810).

6. The hydraulic system of any one of claims 1-5, wherein the drain pathway (702) extends through the fourth endcap (830) of the secondary filter element (800).

7. The hydraulic system of any one of claims 1-6, wherein the drain pathway (702) does not extend through the primary media assembly (710).

8. The hydraulic system of any one of claims 1-7, wherein the third endcap (820) and the first endcap (720) define the drain pathway (702) therebetween.

9. The hydraulic system of any one of claims 1-8, further comprising a fill port pathway extending through the secondary media assembly (810) and the filter assembly outlet, wherein the fill port pathway circumvents the primary media assembly (710).

10. The hydraulic system of any one of claims 1-9, wherein the fill port pathway and the bypass pathway (952) merge into a fluid flow pathway (706).

11. The hydraulic system of any one of claims 1-10, wherein the fill port pathway and the bypass pathway (952) merge with the drain pathway (702).

12. A tank system comprising:
a hydraulic system according to any of claims 1 to 11;
a tank (900) defining a fluid cavity (961), a fluid outlet (966), a filter assembly opening (918), a fluid return inlet (913), and a drain tank inlet (968);
a filter assembly (701) disposed in the fluid cavity (961) and coupled to the tank (900) about the filter assembly opening (918);
a filter cover assembly (909) coupled to the filter assembly (701) and the tank (900);
a filtration pathway (704) extending through the tank (900) from the fluid return inlet (913) to the filter assembly (701); and
a drain conduit (962, 962a, 962b) extending from the drain tank inlet (968) to the filter assembly (701) through the fluid cavity (961), wherein a drain pathway (702) is defined from the drain tank inlet (968) through the drain conduit (962, 962a, 962b) to the filter assembly (701).

13. The tank system of claim 12, wherein the filtration pathway (704) extends from the fluid return inlet (913) through the primary media assembly (710) and through the secondary media assembly (810).
